(19) Europäisches Patentamt
European Patent Office
Office européen des brevets

(11) **EP 4 343 624 A1**

(12) **EUROPEAN PATENT APPLICATION**

(43) Date of publication:
**27.03.2024 Bulletin 2024/13**

(21) Application number: **23196998.1**

(22) Date of filing: **12.09.2023**

(51) International Patent Classification (IPC):
**G06N 3/045** $^{(2023.01)}$    **G06N 3/096** $^{(2023.01)}$

(52) Cooperative Patent Classification (CPC):
**G06N 3/045; G06N 3/096**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.09.2022 GR 20220100775**

(71) Applicant: **Samsung Electronics Co., Ltd.**
**Suwon-si, Gyeonggi-do 16677 (KR)**

(72) Inventors:
• **BULAT, Adrian**
**Surrey, KT16 0RS (GB)**
• **TZIMIROPOULOS, Georgios**
**Surrey, KT16 0RS (GB)**

(74) Representative: **Appleyard Lees IP LLP**
**15 Clare Road**
**Halifax HX1 2HY (GB)**

(54) **METHOD AND APPARATUS FOR VISION-LANGUAGE UNDERSTANDING**

(57)    Broadly speaking, embodiments of the present techniques provide provides a method and apparatus for vision-language understanding. In particular, the present application provides a method for training a vision-language model to classify images using novel classes, and a method for using a trained vision-language model to classify images for a range of downstream tasks.

FIGURE 1A

**Description**

**Field**

The present application generally relates to a method and apparatus for vision-language understanding. In particular, the present application provides a method for training a vision-language model to classify images using novel classes, and a method for using a trained vision-language model to classify images for a range of downstream tasks.

**Background**

Large-scale pretraining of machine learning models has recently resulted in the construction of a series of foundation models for language and vision-language understanding. Unlike prior generations of neural networks, such models can better capture the distribution of the world from which new properties and behavioural characteristics emerge. One such property is their ability to perform zero-shot understanding guided by text prompts. Initially, hand-crafted, recent approaches, first for language and, more recently for vision-language, gradually transitioned from hand-crafting the prompts to learning them automatically using a few labeled samples.

The applicant has therefore identified the need for an improved method of training a vision-language model.

**Summary**

In a first approach of the present techniques, there is provided a computer-implemented method for training a vision-language machine learning, ML, model to classify images depicting novel or known classes, the method comprising: obtaining a first training dataset comprising a plurality of class names; and training the vision-language ML model by: generating, for each class name in the first training dataset, at least one augmented textual prompt to condition the vision-language ML model to output a class name for an object detected in an image; inputting the at least one augmented soft prompt into a frozen text encoder of the vision-language ML model; outputting, from the frozen text encoder, a first text embedding for each augmented textual prompt, the first text embedding representing the class name in the augmented textual prompt; generating a plurality of first inputs by concatenating each learnable soft prompt, from a plurality of learnable soft prompts, to each class name from the first training dataset; inputting the class names from the first training dataset and the generated plurality of first inputs into the frozen text encoder of the vision-language ML model; outputting, from the frozen text encoder of the vision-language ML model, a second text embedding for each first input, the second text embedding representing the class name in each first input; and minimising a cross-entropy text-to-text loss between the first text embedding and the second text embedding, to thereby train the learnable soft prompts to be similar to the augmented textual prompts. The method may be performed by a server.

The term "vision-language machine learning model" used herein means a model which combines vision and language modalities. Specifically, vision-language models have a vision/image module to process images, and a text module to process text, and a technique for fusing together the information from the two modules.

The term "textual prompt" used herein means a manually-defined template sentence or phrase into which a class name can be inserted. Such textual prompts enable text encoders of a vision-language model to create class-specific weights for a class name within a textual prompt.

The term "learnable soft prompt" used herein means a learnable vector. The learnable soft prompt can be input into a text encoder of a vision-language model along with a class name, and the learnable soft prompt can be learned while keeping the text encoder frozen.

The term "frozen text encoder" used herein means a pre-trained text encoder with weights and parameters that are fixed while a training process is being performed. In other words, the pre-trained text encoder is not updated or modified while a subsequent training process is being performed. This is so that the pre-training of the text encoder is frozen and not forgotten during the subsequent training process of the model.

Advantageously, the present techniques provide a method of training a vision-language ML model to be able to recognise novel objects, i.e. objects which the ML model was not trained on, using just a text list of class names of those novel objects. That is, the trained ML model is able to identify novel objects based on only being provided with text, which could be a description or just a class name of the object. This is advantageous because many ML models that perform object recognition and classification are trained using images or image-text pairs (e.g. labelled images), but labelled images are not always readily available. Here, the ML model is trained so that it can recognise a novel object on the basis of a text input relating to the novel object, without requiring an accompanying image depicting the novel object. This allows a user to personalise the trained ML model more easily, because the user can simply provide the trained ML model with novel class names and the ML model is able to perform object recognition using those novel class names. Similarly, this also enables a user to use the model to identify objects based on a list of class names obtained from other sources (such as from a food recipe, a supermarket, etc.) without having to provide example images for those class names.

The vision-language ML model comprises a text encoder and a vision encoder. The text encoder is used to process text inputs and to output text embeddings representing the text inputs, while the vision encoder is used to process image inputs and to output image embeddings representing the image inputs. The two embeddings represent the text inputs and image inputs in a joint embedding/representation space for text and images. The text encoder and vision encoder are pre-trained to align similar text and image concepts in the joint embedding/representation space. Then, during the present training method for training the vision-language ML model, the text encoder is frozen while the training of the ML model occurs to train the learnable soft prompts. As explained in more detail below, the vision encoder may be further trained during the present training method for training the vision-language ML model.

Minimising a cross-entropy text-to-text loss between the first text embedding and the second text embedding may comprise adjusting the learnable soft prompts, so that, for each class name, the second text embedding is similar to the first text embedding. This is desirable because, the class name used to generate the first and second text embedding is the same, and so the embeddings should be similar. The learnable soft prompts are learnable vectors which can be trained, such that the whole text encoder does not need to be retrained. That is, while finetuning models pre-trained on large-scale datasets with self-supervised contrastive learning results in a strong supervised classifier, the fine-tuning process severely negatively impacts the ability to classify unseen classes. To alleviate this, the text encoder is kept frozen - which has been pre-trained - and only a small set of learnable parameters, named "soft prompts" are trained. These parameters are passed as input into the text encoder alongside the text class names from the data pairs. (These parameters are also input into the text encoder whenever text inputs are received that do not correspond to any images).

As mentioned above, a goal of the present training method is to enable the trained ML model to recognise novel objects. To enable this, the method comprises training the ML model using the first training dataset which does not contain any visual examples for the class names therein.

Specifically, in a similar way to image augmentation, the first training dataset is used to perform text augmentation, and the augmented text is used to train the ML model. Here, the augmented text is an augmented textual prompt, which is a sentence or short phrase that contains a class name of interest. For example, if the first training dataset comprises the class name "bamboo forest", the augmented textual prompts generated using the class name may include "A rotated image of a bamboo forest", "A zoomed-in image of a bamboo forest", "A sketch of a bamboo forest", and so on. In this way, the class name is augmented by forming sentences or short descriptors using the class name. As the text encoder is part of a vision-language model, the augmented textual prompts may be image-based, because the model is trying to classify images. These augmented textual prompts are then used alongside the original class names of the first training dataset to train the text encoder.

Generating at least one augmented textual prompt may comprise: selecting at least one manually-defined augmentation template from a plurality of augmentation templates, each augmentation template being a text phrase into which a class name is insertable; and inserting a class name from the first training dataset into the selected at least one augmentation template, thereby generating at least one augmented soft prompt. This is useful in the same way that having a set of image transformation techniques is useful - the augmentation templates are defined ways of augmenting the training data to generate new training inputs.

Selecting at least one augmentation template may comprise selecting at least one group of augmentation templates. That is, the plurality of augmentation templates may be split into groups, and each group may be associated with a certain sequence or set of prompt types that produce a class specific text feature.

As mentioned above, the vision-language ML model comprises a text encoder and a vision encoder. The training method comprises training the vision encoder as well as the learnable soft prompts that are input into the text encoder. Thus, the method may further comprise obtaining a second training dataset comprising a plurality of data pairs, each data pair comprising an image depicting an object and a class name for the object. The second training dataset therefore differs from the first training dataset because the second training dataset comprises text and images. The class name in each data pair corresponds to an object in the image of the data pair. Thus, the images in the second training dataset are essentially labelled images.

To enable training of both the vision encoder and text encoder, the ML model is trained using the data pairs, where each data pair comprises an image of an object and a corresponding text class name. However, the input into the text encoder is not simply the text class name from each data pair. Rather, the input into the text encoder is the text class names and a plurality of text inputs based on the text class names. The text inputs are generated using the text class names and learnable soft prompts. Thus, with the second training dataset available, training the vision-language ML model may further comprise: generating a plurality of second inputs by concatenating each learnable soft prompt, from the plurality of learnable soft prompts, to each class name from the data pairs in the second training dataset; inputting the class names from the second training dataset and the generated plurality of second inputs into the frozen text encoder of the vision-language ML model; outputting, from the frozen text encoder of the vision-language ML model, a third text embedding for each second input, the third text embedding representing the class name in each second input; inputting into a vision encoder of the vision-language ML model, the images in each data pair of the second training dataset; outputting, from the vision encoder, an image embedding for the object in each input image from the data pairs; and minimising a cross-entropy text-to-text loss between the third text embeddings and the image embeddings.

Training the vision-language ML model by minimising a cross-entropy image-to-text loss between the third text embeddings and the image embeddings may comprise adjusting learnable parameters of the vision encoder of the ML model. Specifically, layer normalisations of the vision encoder are fine-tuned to thereby train the vision encoder to, for each data pair, output image embeddings that are similar to the third text embeddings.

Training the vision-language ML model may further comprise learning how to reduce an impact of data distribution shift. Data distribution shift may arise when the image data used to pre-train the vision encoder is different to the images in the data pairs of the second dataset, which may be for a specific downstream task. Thus, the layer normalisation fine-tuning is performed to combat data distribution shift, as outlined above. However, after the fine-tuning is performed, the vision and text encoders may not be aligned. Thus, the method further comprises learning an offset or bias at the output of the text encoder which can be used to re-align the two encoders. Training the ML model may further comprise reducing an impact of data distribution shift by: learning an offset at the output of the text encoder for realigning the vision and text encoders; and adding the offset to weights of the text encoder. In other words, the ML model is trained to correct for the bias. The fine tuning and bias correction steps may preferably be performed simultaneously.

Training the vision-language ML model by minimising a cross-entropy image-to-text loss between the third text embeddings and the image embeddings may comprise adjusting the learnable soft prompts used to generate the second inputs into the frozen text encoder, so that, for each data pair, the third text embedding is similar to the image embedding. Thus, the learnable soft prompts are adjusted via two training processes.

The vision encoder may be trained using both the images in the data pairs of the second training dataset and augmented versions of those images. To do so, an image from a data pair is augmented using one or more possible augmentation techniques. The augmentation may result in a synthetically-generated version of the original image in the data pair. The vision encoder then processes the augmented image to output an image embedding for each object in the augmented image. The text class name in the corresponding data pair provides the ground truth. The image from the data pair may be augmented by applying at least one image transformation, such as rotation, tilting, flipping about an axis, enlarging, etc. The image from the data pair may be augmented by altering an appearance of the image by applying one or more of: a change in colour distribution, noise, Gaussian noise, a blur, motion blur, zoom blur, simulated weather effects, simulated changes in lighting, etc. The image from the data pair may be augmented by inserting an object into the image, which could be non-overlapping or partially-overlapping with the object in the original image.

The training of the vision-language ML model may comprise jointly training the vision and text encoders. Jointly training the vision encoder and the text encoder may comprise alternating between optimising a loss associated with the vision encoder and a loss associated with the text encoder.

The training of the vision-language ML model may comprise using zero shot and/or mixed few shot training.

In a related approach of the present techniques, there is provided a server for training a vision-language machine learning, ML, model to classify images using novel classes, the server comprising at least one processor coupled to memory for implementing any of the methods described above with respect to the first approach. Therefore, the features described above with respect to the first approach apply equally here and, for the sake of conciseness, are not repeated.

In a second approach of the present techniques, there is provided an apparatus for using a trained vision-language machine learning, ML, model to classify images depicting novel or known classes, the apparatus comprising: an interface for receiving at least one input text data item containing at least one class name; storage storing a list of class names and corresponding text embeddings; and at least one processor coupled to memory arranged to use the trained vision-language ML model to: generate, using a text encoder of the vision-language ML model, a text embedding representing each class name in the input text data item, compare the generated text embedding to text embeddings of the class names in the stored list to determine whether the generated text embedding is novel, and add, when the generated text embedding for a class name is novel, the class name and the corresponding text embedding to the list of class names in the storage.

Thus, once trained, the trained ML model is able to recognise both known objects (i.e. previously seen during training) and novel objects (i.e. not seen during training) in images. In cases where the trained ML model is provided with a text input that contains a previously seen class, the trained ML model is able to process the text input in a straightforward manner. In other cases, the trained ML model is provided with a text input which contains or represents a novel class. For example, the text input may be a single word or term representing a name of a novel class, or may be a sentence containing a novel class, or may be a list of class names, where one or more of the class names may be novel. This is advantageous because the user of the model may be able to simply enter novel classes as text inputs, and does not need to also provide corresponding example images depicting the novel objects. This is particularly advantageous in certain scenarios where obtaining the corresponding images would be very onerous on the user. For example, if the user is using this trained ML model in conjunction with an AI cooking assistant, the user may want to input an ingredients list from a recipe (so that the AI cooking assistant can help the user to perform the recipe), where the ingredients list may contain one or more novel classes. The present techniques remove the need for the user to input images representing every ingredient in the list.

When the interface receives at least one image, the at least one processor may be arranged to: identify, using a vision encoder of the vision-language ML model at least one object in each input image, and generate, using the vision encoder, an image embedding for each identified object; compare the image embedding for each identified object with text embeddings in the storage, to determine a similarity; and output, using the comparison, a class name for each identified object in the input image based on the most similar embeddings. In other words, the ML model outputs a class name for each identified object in the input image, where the class name may be a class name that the model was trained to recognise, or a novel class name that the model has received after training.

The interface may receive the at least one input text data item from a user or from an external source. That is, a user could input the text data item, or the text data item could be downloaded from an external source. For example, the external source may be an online food recipe that the user is following, or from a supermarket or other shop.

The at least one input text data item may be a single novel class name and/or at least one sentence containing the novel class name.

The apparatus may further comprise an AI assistant, wherein the class name output from the vision-language ML model is input into the AI assistant for processing. Thus, in some cases, the output of the vision-language model may be output directly to a user, while in other cases, the output may be used to control another entity or device, and in other cases, the output may be input into another model (such as an AI assistant model).

In some cases, the AI assistant may be an AI cooking assistant. In such cases, the interface may be arranged to receive a plurality of input text data items comprising ingredients from a target recipe, and at least one image of a user following the target recipe. The processor of the apparatus may use the trained vision-language ML model to identify objects in the at least one image corresponding to the ingredients. The AI assistant may then use the identified objects to provide instructions to the user. For example, the at least one image may be frames of a real-time video of a user performing steps of a recipe to make an apple pie. The user may be performing a step of the recipe which involves cutting apples for the apple pie. The vision-language ML model may receive the list of ingredients as an input text data item. The model may receive the method steps as an input text data item too (which refer to the ingredients and utensils/equipment needed). The vision-language ML model may identify and classify, using just the input text data item(s), the objects in the video frames corresponding to classes in the input text data item(s). For example, the ML model may identify apples and a knife. The classified images may be provided to the AI cooking assistant so that the AI cooking assistant model can determine what step of the recipe the user is at, and provide the user with tips to perform that step. The AI cooking assistant may also be able to provide the user with instructions about the next step to perform.

In another example, the AI assistant may be part of or used in conjunction with a smart fridge. The AI assistant may be provided with a list of ingredients from a target recipe, and may analyse the list and images of the contents of a smart fridge to determine whether the smart fridge contains the ingredients in the recipe. The AI assistant may then provide the user with an indication of whether they need to purchase any ingredients for the recipe (or to check elsewhere in their kitchen for the ingredients).

The storage of the apparatus may comprise a plurality of images. For example, the storage may comprise a photo gallery. In this case, the interface may be arranged to receive an input text data item indicating an object or class to be identified in the plurality of images, and the processor of the apparatus may use the trained vision-language ML model to analyse the images in the storage and output at least one image from the plurality of images corresponding to the input text data item. Thus, the apparatus enables fast photo gallery search to be performed based on input text data items only (i.e. a novel class in text form).

More generally, the apparatus may be used to perform any vision-language task. The trained ML model may be used to perform the task or may be used together with another model (e.g. an AI assistant model) to perform the task.

For example, the vision-language task may be a generation task, and when the input data item is an image, the at least one response output by the ML model may be any one of: an answer to a question based on the input image, and a description for the input image. For example, the description of the input image, or answer to the question, may indicate whether a particular class of object is present in the image.

The vision-language task may be a generation task, and when the input data item is text, the at least one response output by the ML model may be a synthetic image generated using the input text.

The vision-language task may be a classification task, and when the input data item is an image, the at least one response output by the ML model may be a text description of the image.

The vision-language task may be a classification task, and when the input data item comprises an image and text, the at least one response output by the ML model may be an indication of whether the text correctly describes the image.

The vision-language task may be a retrieval task, and when the input data item is text, the at least one response output by the ML model may be at least one image extracted from a database of images based on the text.

The apparatus may be a constrained-resource device, but which has the minimum hardware capabilities to use a trained neural network/ML model. The apparatus may be any one of: a smartphone, tablet, laptop, computer or computing device, virtual assistant device, a vehicle, an autonomous vehicle, a robot or robotic device, a robotic assistant, image capture system or device, an augmented reality system or device, a virtual reality system or device, a gaming system, an Internet of Things device, or a smart consumer device (such as a smart fridge). It will be understood that this is a non-exhaustive and non-limiting list of example apparatus.

In a related approach of the present techniques, there is a method for using a trained vision-language machine learning, ML, model to classify images using novel classes. The features described above with respect to the second approach apply equally to this method and, for the sake of conciseness are not repeated.

In a related approach of the present techniques, there is provided a computer-readable storage medium comprising instructions which, when executed by a processor, causes the processor to carry out any of the methods described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise subcomponents which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The method described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/o may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

**Brief description of the drawings**

Implementations of the present techniques will now be described, by way of example only, with reference to the accompanying drawings, in which:

Figure 1A is a schematic diagram of the vision-language model of the present techniques;
Figure 1B is a block diagram showing the text encoder of the ML model of Figure 1A;
Figure 1C is a schematic diagram showing how class names are used to generate augmented textual prompts;
Figure 1D shows a schematic diagram of how augmented textual prompts are used to train the ML model;
Figure 1E is a block diagram showing the image or vision encoder of the ML model.
Figure 1F is a schematic diagram showing how the outputs of the image encoder and text encoder are used to obtain a cross-entropy loss;
Figure 2A is a flow chart of example steps to train the present vision-language ML model;
Figure 2B shows the process to generate, for each class name in the first training dataset, at least one augmented textual prompt;
Figure 2C shows the process to train the ML model using the first training dataset;
Figure 2D shows the process to train the ML model using the second training dataset;
Figure 3 is a schematic block diagram of how the trained ML model may be used to classify images using novel classes;
Figures 4A to 4D show experimental data of the performance of the present vision-language ML model compared with an existing model;
Figure 5 shows results of experiments to compare the present techniques with the current state-of-the-art;
Figure 6 shows results of experiments on the effect of different components of LASP;
Figure 7 shows results of experiments on the choice of augmented templates;
Figure 8 shows results of experiments on varying the choice of loss;
Figure 9 shows results of experiments on the effect of out-domain distractors;
Figure 10 shows results of experiments on the effect of in-domain distractors;
Figure 11 is a flowchart of example steps to train a vision-language ML model using the present techniques;
Figure 12 is a flowchart of example steps to use a trained vision-language ML model to perform a vision-language task; and
Figure 13 is a block diagram of a system 300 for training and using a ML model to perform a vision-language task

**Detailed description of the drawings**

Broadly speaking, embodiments of the present techniques provide a method and apparatus for vision-language understanding. In particular, the present application provides a method for training a vision-language model to classify images using novel classes, and a method for using a trained vision-language model to classify images for a range of downstream tasks.

Large-scale pre-training of neural networks has recently resulted in the construction of a multitude of foundation models for Language, and Vision & Language (V&L), understanding. Unlike the previous generation of neural networks, such models can better capture the distribution of the world from which new favorable properties and characteristics emerge. Of particular interest to this work are V&L models trained with contrastive learning (i.e. CLIP-like models), which have enabled seamless few-shot and even zero-shot adaptation to new downstream tasks and datasets. The present applicant proposes a simple yet highly effective way to drastically improve soft prompt learning for the few-shot adaptation of the V&L model to a given downstream task.

Similarly to their NLP counterparts, prompt engineering and learning has emerged as one of the most powerful techniques for adapting a V&L to new tasks. Initially, in early models, a set of manually-defined hand-engineered templates (or prompts) like a photo of a {cls_name}, or a black and white photo of a {cls_name} were passed through the text encoder of the V&L model to create class-specific weights for category cls_name that can be used for zero-shot recognition. Following research in NLP, subsequent work has proposed replacing the manually picked templates with a sequence of learnable vectors, also coined *soft prompts,* which are fed as input to the text encoder along with the class name cls_name. The soft prompts are learned from a few training examples with the entire V&L model kept frozen. The whole process can be seen as parameter efficient fine-tuning of the model on a small training dataset.

However, a clearly identifiable problem with prompt learning is base class overfitting: while the accuracy on the classes used for training (base classes) significantly increases, the accuracy on unseen, during training, (novel) classes significantly drops. This is to some extent expected, as soft prompts are learned from few examples belonging to the base classes. Notably, on novel classes, direct, zero-shot recognition using hand-engineered prompts outperforms all existing soft prompt learning methods.

To alleviate base class overfitting, the present applicant proposes a solution motivated by the following observation: since prompt learning improves the accuracy on base classes, but prompt engineering is significantly better on novel classes, it is proposed to learn the soft prompts by adding a cross entropy text-to-text loss that enforces the learned prompts to be close, in embedding space, to the textual ones, thus exploiting the intrinsic information captured by the text encoder. The proposed text-to-text loss enables language-only optimization for V&L model adaption for the first time. This is in contrast with prior soft-prompt learning methods that only capture V&L interactions.

The present techniques provide at least the following contributions:

- a novel framework for soft prompt learning, referred to herein as Language-Aware Soft Prompting (LASP);
- a language-only optimistion for V&L model adaption. Specifically, a novel text-to-text cross-entropy loss that maximizes the probability of the learned prompts to be correctly classified with respect to the hand-engineered ones. The effectiveness of this new loss in terms of alleviating base-class overfitting is demonstated below;
- a grouped language-aware prompt representation where *each group* of prompts specializes to a different subset of the pre-defined manual templates;
- a re-calibration mechanism based on (a) Layer Normalization fine-tuning and (b) learning a class-agnostic bias to address it; and
- a novel training method for LASP which involves trianing with class names for which no visual samples are available.

The present techniques provide a new state-of-the-art for few-shot and zero-shot image classification on 11 datasets, significantly outperforming all soft prompting prior works. Importantly, a prompt learning method is presented that outperforms, for the majority of the test datasets (8 out of 11), the very strong baseline based on hand-crafted prompts and CLIP for the recognition of novel classes (i.e. zero-shot setting).

Prior to describing the present techniques, some relevant prior work is described.

Contrastive Vision-Language Models: Recently, large scale vision-language pre-training with contrastive learning has being shown to learn models with robust representations, transferable to new tasks both in a zero-shot and few-shot setting. Such networks consist generally of a vision encoder (typically a Vision Transformer) and a transformer-based text encoder. Highly-parameterized instantiatios of such architectures are then trained on large corpuses of vision-language pairs upward of 400 million using contrastive learning based approaches. In contrast, the present techniques take an orthogonal direction to this, attempting to improve the downstream performance of such methods on few-shot and zero-shot scenarios, by learning a set of prompts used to compliment the input of a frozen Contrastive Language-Image Pre-training (CLIP) model.

Prompt Learning is concerned with adapting pre-trained foundational models on downstream tasks, typically in a zero-shot or few-shot setting. Initially studied in the context of large language models, LMs, prompting in its simplest form was initially concerned with prepending hand-crafted instructions/examples to the task input so that the LM generates the appropriate output conditioned to the input or augment the text embedding representation for CLIP, bringing it close to the image one on the selected downstream dataset. In the context of LMs, techniques aim to reformulate the downstream task as a *cloze* task using hand-crafted patterns (or templates), thus avoiding the need to train a task-specific classifier. As finding the optimal patterns is laborious, recent works have attempted to address this by learning a set of soft (continuous) prompts.

In vision-language foundation models, like CLIP, the class names are used to create hand-crafted prompts that are fed as input to the text encoder, enabling zero-shot visual recognition. CoOp extends work on soft prompt optimization to the vision-language domain by learning a set of M prompts which are used as input to the text encoder alongside the class name. The prompts are learned by minimizing the classification error on a training set consisted of the given base classes. One major limitation of CoOp is weak generalization: the learned prompts overfit the base classes and do not work well when tested on novel classes. The CoOP technique merely uses prompts (p) and class names (CLS) to minimise the distance between vision and language embeddings. To alleviate this, CoCoOp proposes a dynamic version of CoOp where a small network is trained to produce a visual feature from the input image that is added to the learned prompts, hence making them input specific (i.e. dynamic).

In contrast to existing techniques, and as described in more detail below, the loss of the present techniques is a pure text-to-text loss, further allowing for the incorporation of virtual classes. The present techniques outperform CLIP on novel classes.

The present techniques propose to leverage the joint vision-language space learned by CLIP by optimising the prompts both in the vision-language domain and language-language domain. In addition to minimising the distance between the vision and language embeddings, the present techniques, referred to herein as LASP, fully utilizes the intrinsic model of the world learned by the text encoder, by minimising the loss between the soft learnable prompts (p), as well as the class names (CLS) and sentences (G) with the CLS token inserted. This formulation can incorporate novel class names for which no visual information is available (i.e. classes having no corresponding images).

The advantages are multifold: (a) Analogous with the image augmentation that allow the model to generalise to variations in scale, pose, rotation etc., the text can be augmented by adding context or distractors. The model is then forced to correctly classify this text prompts given the learned ones. (b) It acts as a regularizer. (c) It allows a mixed few-shot and zero-shot training, where the model can be trained to be aware of classes for which no visual data exists. Thanks to these properties, the present techniques can outperform methods that are conditioned both on the prompts and the image features.

The present techniques alleviate base class overfitting and significantly improve upon the previously reported best results without resorting to a dynamic approach as in CoCoOp. In its basic version, LASP deploys a text-to-text loss that enforces the learned prompts to be "close" to a set of manually defined textual prompts in the text encoder space. Importantly, the basic LASP can be extended in three important ways: (1) by allowing the incorporation of virtual classes, i.e. novel class name information for which no (visual) training data is available (LASP-V). This is shown to significantly improve the robustness of the learned prompts at no extra cost during inference; (2) by allowing the use of a grouped prompt representation within the proposed language-aware training which is shown to increase the representation capacity of the learned prompts; (3) by performing further optimization of the visual encoder so that the visual and text embeddings are realigned resulting in significant accuracy gains. Notably, the present approach is very efficient (as efficient as CoOp) as opposed to CoCoOp which requires recomputing all the class-related text embeddings every time a new image is to be classified.

Method: Background

Prompt engineering enables zero-shot visual recognition using vision-language models trained with contrastive learning (CLIP in this work) as follows: Given a set $V$ of $C$ class names, $class\_name_c$, $c \in \{1, ..., C\}$, a prompt, i.e. a manually designed template concatenated with the class name like $h_c$ =a photo of a {$class\_name_c$}, is passed through the V&L's text encoder $g_T(.)$ to compute the class specific text feature (weight) $\mathbf{t}_c^h = g_T(h_c)$. Moreover, an image $\mathbf{x}$ to be classified is passed through the V&L's image encoder $g_I(.)$ to compute image specific feature $f = g_I(\mathbf{x})$. A probability distribution over the class labels is given by:

$$P_h(y|\mathbf{x}) = \frac{\exp(cos(\mathbf{t}_y^h,\mathbf{f})/\tau)}{\sum_{c=1}^{C} \exp(cos(\mathbf{t}_c^h,\mathbf{f})/\tau)}, \qquad (1)$$

where $\tau$ is a temperature factor and $cos$ the cosine similarity. Finally, the class for $\mathbf{x}$ is given by $\tilde{y} = \arg_{max}P_h(y|\mathbf{x})$. Note that, to compute $\mathbf{t}_c^h$, no training with class specific image data is required, thus enabling zero-shot recognition for any given class name.

Soft prompt learning is concerned with parameter efficient fine-tuning of a pre-trained vision-language model by learning a sequence of *M* learnable vectors $\mathbf{p}_m \in \mathbb{R}^d$, $m = \{1, ..., M\}$ using a few labelled samples. Specifically, the manually picked prompt $h_c$ is replaced by a new learnable one $\mathbf{r}_c$ formed by concatenating the sequence of $\mathbf{p_m}$ with the word embedding $w_c$ of *class_name_c*, that is: $\mathbf{r}_c = \{\mathbf{p}_1, \mathbf{p}_2, ..., \mathbf{p}_M, w_c\}$, and, finally, a class specific text feature $\mathbf{t}_c^r = g_T(\mathbf{r}_c)$ is obtained. A probability distribution over the class labels is:

$$P_r(y|\mathbf{x}) = \frac{\exp(cos(\mathbf{t}_y^r, \mathbf{f})/\tau)}{\sum_{c=1}^{C} \exp(cos(\mathbf{t}_c^r, \mathbf{f})/\tau)}. \qquad (2)$$

The prompts can be learned by minimizing the cross-entropy loss:

$$\mathcal{L}_{VL} = -\sum_{c=1}^{C} \log P_r(c|\mathbf{x})y_c. \qquad (3)$$

Note that the vision-language model remains entirely frozen during training. Moreover, as the soft prompts are typically shared across all classes, they can be directly used for zero-shot evaluation on additional novel classes

Method: Language Aware Soft Prompting (LASP)

Despite their strong performance on base (i.e. seen) classes, current vanilla soft prompt based optimisation methods under-perform on novel classes (i.e. zero-shot setting). While CoCoOP partially alleviates this in part by learning a small neural network conditioned on the image features, the accuracy on zero-shot is still trailing behind that of CLIP with hand crafted prompts. Moreover, it requires passing the prompts for all classes through the text encoder every time a new image is to be classified.

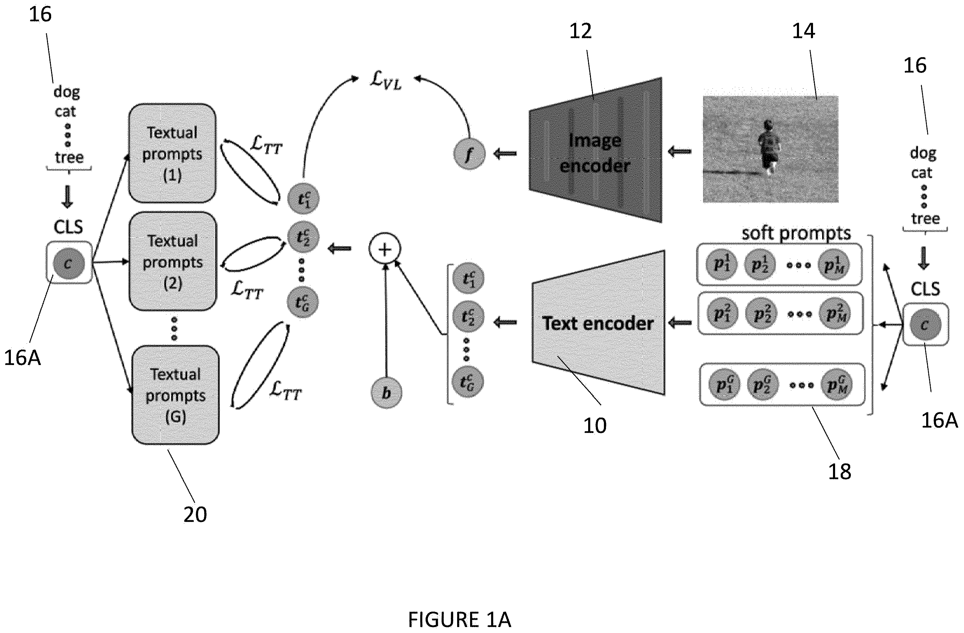

Figure 1A is a schematic diagram of the vision-language model of the present techniques. The present techniques jointly model image-text and text-text interactions using the proposed Text-to-Text loss $L_{TT}$ (Eq. (3)). That is, departing from the current paradigm of considering only the vision-language interactions between the prompts and the image, the present techniques exploit the intrinsic model of the world learned by the text encoder. This (1) takes advantage of the relational representation encoded in the language model, (2) enable augmentations on the text data to be performed, and (3) creates a mixed few-shot + zero-shot training procedure, which enables the incorporation of classes for which there are no labeled samples.

There are *G* groups of learned prompts $\mathbf{p}_i^j$ passed through the text encoder to form *G* text embeddings $\mathbf{t}_j$ summarizing the input. The $L_{TT}$ loss is then applied over the different groups of the text embeddings and the textual prompts. Moreover, to alleviate data distribution shift and visual-language misalignment, the LN layers of the visual encoder are fine-tuned and the embeddings are "corrected" at the output space by the learnable vector $\mathbf{b}$, shared for all classes. The text encoder remains entirely frozen. Notably, LASP can be trained with virtual classes by including, during training, class names for which no visual samples are available.

The present techniques contribute a novel language-only optimization for vision-language downstream adaption. This is in contrast with prior soft-prompt learning methods that only capture vision-language interactions. Specifically, since the hand-engineered textual prompts outperform the learnable soft prompts for the zero-shot setting, then, in order to avoid base-class overfitting and strengthen generalizability, the learnable prompts of the present techniques are trained so that they can be correctly classified in language space where the class weights are given by the textual prompts. In other words, the model is forced to correctly classify the learnable prompts into the corresponding hand-crafted ones.

To this end, a second cross entropy loss is used to minimize the distance between the encoded learned soft prompts and the encoded textual ones. Specifically, recall that $\mathbf{t}_c^h = g_T(h_c)$ is the class weight for class c obtained by encoding the corresponding textual prompt. Assuming that *L* manually defined textual prompts are available, we have $\mathbf{t}_c^{h,l}$, *l* = 1, ... , *L*. Moreover, $\mathbf{t}^r$ is an encoded learnable prompt to be classified in one of the *C* classes. Finally, the probability of prompt $\mathbf{t}^r$ being classified as class *y* is:

$$P_{rh}(y|\mathbf{t^r}) = \frac{1}{L}\sum_{l=1}^{L} \frac{\exp(cos(\mathbf{t}_y^{h,l},\mathbf{t}^r)/\tau)}{\sum_{c=1}^{C}\exp(cos(\mathbf{t}_c^{h,l},\mathbf{t}^r)/\tau)}. \qquad (2)$$

The language-aware training loss is computed similarly to the V&L loss:

$$\mathcal{L}_{TT} = -\sum_{c=1}^{C} \log P_{rh}(c|\mathbf{t}^r)y_c, \qquad (3)$$

with the overall training objective defined as:

$$\mathcal{L} = \alpha_{VL}\mathcal{L}_{VL} + \alpha_{TT}\mathcal{L}_{TT}, \qquad (4)$$

where $\alpha_{VL}$ and $\alpha_{TT}$ are user-defined scaling coefficients controlling the magnitude of the $\mathcal{L}_{VL}$ and $\mathcal{L}_{TT}$ losses, respectively. As mentioned already, the proposed learning formulation is called Language-Aware Soft Prompting (LASP).

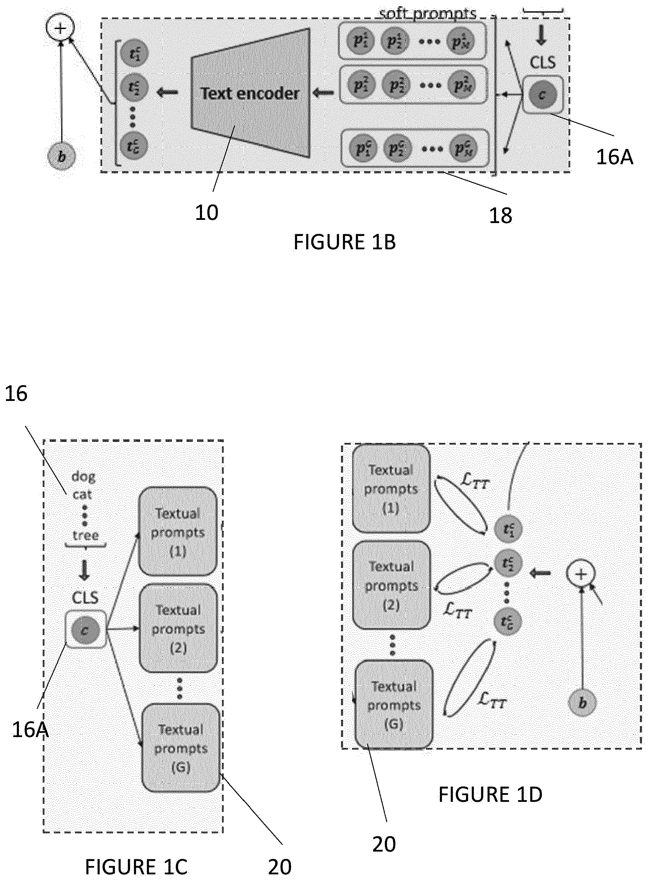

Figure 1A is now described in more detail. The vision-language ML model comprises a text encoder 10 and an image encoder 12. The text encoder 10 is used to process text inputs 16, 18 and to output text embeddings representing the text inputs, while the vision encoder 12 is used to process image inputs 14 and to output image embeddings representing the image inputs. The two embeddings represent the text inputs and image inputs in a joint embedding/representation space for text and images. The text encoder and vision encoder are pre-trained to align similar text and image concepts in the joint embedding/representation space. Then, during training of the present vision-language ML model, the text encoder 10 is frozen while the training of the ML model occurs to train learnable soft prompts. The vision encoder 12 is further trained during training of the present vision-language ML model, to generate image embeddings for each image input. Various components or blocks of the vision-language ML model are now described in more detail with respect to Figures 1B to 1F.

Figure 1B is a block diagram showing the text encoder 10 of the ML model. The input into the text encoder 10 is text. As noted above, the text encoder 10 outputs a d-dimensional feature vector (f), which is a text embedding corresponding to a class name.

The text encoder 10 itself of the ML model is pre-trained to learn how to output text embeddings. In the present techniques, the text encoder 10 is not further trained. Instead, the training of the vision-language ML model comprises learning a set of vectors, referred to herein as "learnable soft prompts", which are used to provide suitable inputs into the text encoder 10 that enable the text encoder 10 to generate the text embeddings. The text encoder 10 is therefore frozen (kept fixed) during the training of the ML model, i.e. is not retrained or further trained.

The learnable soft prompts begin with some initial values, which may have been set during the pre-training of the text encoder 10. The learnable soft prompts are trained/updated in two ways. In the first way, the learnable soft prompts are updated based on training the ML model using a first training dataset 16 comprising a plurality of class names 16A. That is, the training of the ML model involves using a training dataset 16 that only contains text class names 16A and no corresponding images. In this case, training the vision-language ML model comprises generating, for each class name 16A in the first training dataset, at least one augmented textual prompt 20 to condition the vision-language ML model to output a class name for an object detected in an image. The at least one augmented textual prompt 20 is input into the frozen text encoder 10 of the ML model, and the frozen text encoder 10 outputs a first text embedding for each augmented textual prompt 20, the first text embedding representing the class name in the augmented textual prompt 20. The method comprises generating a plurality of first inputs by concatenating each learnable soft prompt, from a plurality of learnable soft prompts 18, to each class name 16A from the first training dataset 16. The class names 16A from the first training dataset 16 and the generated plurality of first inputs are input into the frozen text encoder 10 of the ML model, and the frozen text encoder

10 outputs a second text embedding for each class name 16A. The method then involves minimising a cross-entropy text-to-text loss ($\mathcal{L}_{TT}$) between the first text embedding and the second text embedding, to thereby train the learnable soft prompts to be similar to the augmented textual prompts. Minimising a cross-entropy text-to-text loss between the first text embedding and the second text embedding may comprise adjusting the learnable soft prompts. Thus, the output of this training using the first training dataset results in updated soft prompts. The learnable soft prompts 18 may be updated using gradient descent using the text-to-text loss ($\mathcal{L}_{TT}$) between the first and second text embeddings.

While finetuning models pre-trained on large scale datasets with self-supervised contrastive learning results in strong supervised classifier, in the fine-tuning process the ability to classify unseen classes is severely affected. As such, to alleviate this, the text encoder 10 is kept frozen instead, and only the small set of learnable parameters ("soft prompts") 18 are trained. The learnable parameters 18 are passed as input into the text encoder 10 alongside the class names 16A as mentioned above.

Figure 1C is a schematic diagram showing how the class names 16A are used to generate the augmented textual prompts. The method comprises generating, for each class name 16A in the first training dataset, at least one augmented textual prompt 20. That is, the list/dataset 16 of class names 16A, for which there may or may not be corresponding visual examples, is used to generate the augmented textual prompts 20. Generating at least one augmented textual prompt may comprise: selecting at least one manually-defined augmentation template from a plurality of augmentation templates, each augmentation template being a text phrase into which a class name is insertable, and inserting a class name 16A from the first training dataset 16 into the selected at least one augmentation template, thereby generating at least one augmented textual prompt 20. This is useful in the same way that having a set of image transformation techniques is useful - the augmentation templates are defined ways of augmenting the training data to generate new training inputs.

Selecting at least one augmentation template may comprise selecting at least one group of augmentation templates. That is, the plurality of augmentation templates may be split into groups, and each group may be associated with a certain sequence or set of prompt types that produce a class specific text feature. For example, the augmentation templates may be split into groups depending on the aspect they cover (e.g. pose, photo quality, perspective etc). The output in this case is a set of augmented class names, one set per group of templates.

Current soft prompt learning methods restrict augmentation to the vision domain, where random transformations, such as rotation, colour jittering or scaling, increase the robustness of the system, especially for cases with limited number of training samples. However, in existing techniques, no augmentations are performed in the language domain. Ideally, it is desirable for the prompt-conditioned text embedding to be robust too, capturing the full space of each class. The present techniques achieve this by targeted prompting, where certain characteristics can be specified and/or text-based transformations can be applied to the class name, e.g.: "A sketch of dog" or "A rotated photo of a dog".

Figure 1D shows a schematic diagram of how the augmented textual prompts 20 are used to train the ML model. The at least one augmented textual prompt 20 is input into the frozen text encoder 10 of the ML model, and the frozen text encoder 10 outputs a first text embedding for each augmented textual prompt 20. Thus, the input into the text encoder 10 is the augmented class names/augmented textual prompts 20, and class name descriptors, adjusted with a shared learnable bias "b". The output of the text encoder 10 is a list of d-dimensional feature vectors encoded by the text encoder, one vector per class name. As mentioned above, the method then involves minimising a cross-entropy text-to-text loss $L_{TT}$ that forces the augmented textual prompts 20 to be correctly classified given the class name text descriptors t. Note than unlike prior work, this is the first time text-to-text optimisation is used for image-vision recognition. As mentioned above, despite its strong performance on base classes, vanilla soft prompt learning under-performs on novel classes (i.e. zero-shot setting). To alleviate this, the present techniques propose, for the first time, language-only optimization for vision-language downstream adaption. This is in contrast with prior soft-prompt learning methods that only capture vision-language interactions. Specifically, since the hand-engineered textual prompts outperform the learnable soft prompts for the zero-shot setting, then, in order to avoid base-class overfitting and strengthen generalizability, it is proposed that the learnable soft prompts 18 should be trained so that they can be correctly classified in language space where the class weights are given by the textual prompts. In other words, the model is forced to correctly classify the learnable prompts into the corresponding hand-crafted ones.

As shown in Figure 1A, the ML model comprises an image or vision encoder 12. The training method comprises training the vision encoder 12 while also training/updating the learnable soft prompts 18. This is the second way of training/updating the learnable soft prompts 18. To do this, the training of the ML model further comprises obtaining a second training dataset comprising a plurality of data pairs, where each data pair comprises an image depicting an object and a class name for the object. The second training dataset therefore differs from the first training dataset because the second training dataset comprises text and images. The class name in each data pair corresponds to an object in the image of the data pair. Thus, the images in the second training dataset are essentially labelled images.

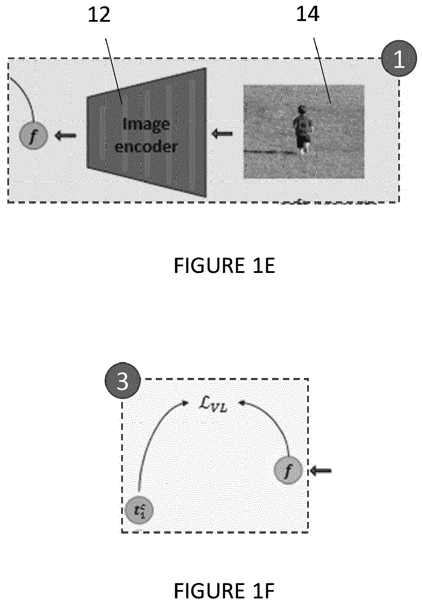

Figure 1E is a block diagram showing the image or vision encoder 12 of the ML model. The input into the vision encoder 12 is an image 14. During training, the image 14 is obtained from a labelled dataset (i.e. the second training dataset containing pairs of data items, where each pair comprises an image and text). During inference, the image 14 may be obtained from any source and input into the ML model for any vision-language task. The image 14 may be an RGB colour image. The vision encoder 12 processes the input image 14, identifies each object in the image, and for each object, outputs a d-dimensional feature vector (f). This feature vector is then used to classify the identified object and used to generate a image embedding corresponding to the class assigned to the identified object.

To enable training of both the vision encoder and text encoder, the ML model is trained using the data pairs, where each data pair comprises an image 14 of an object and a corresponding text class name. However, the input into the text encoder is not simply the text class name from each data pair. Rather, the input into the text encoder is the text class names and a plurality of text inputs based on the text class names. The text inputs are generated using the text class names and learnable soft prompts 18. Thus, with the second training dataset available, training the vision-language ML model may further comprise generating a plurality of second inputs by concatenating each learnable soft prompt, from the plurality of learnable soft prompts 18, to each class name from the data pairs in the second training dataset. The class names from the second training dataset and the generated plurality of second inputs are then input into the frozen text encoder 10 of the ML model. The frozen text encoder 10 outputs a third text embedding for each second input, the third text embedding representing the class name in each second input. Training the vision encoder 12 of the ML model comprises inputting the images 14 in each data pair of the second training dataset into the vision encoder 12, and outputting, from the vision encoder 12, an image embedding for the object in each input image from the data pairs. The training method then involves minimising a cross-entropy image-to-text loss ( $\mathcal{L}_{VL}$ ) between the third text embedding and the image embedding.

Training the vision-language ML model by minimising a cross-entropy image-to-text loss ( $\mathcal{L}_{VL}$ ) between the third text embedding and the image embedding may comprise adjusting the learnable soft prompts 18 used to generate the second inputs into the frozen text encoder, so that, for each data pair, the third text embedding is similar to the image embedding. Thus, the learnable soft prompts are adjusted via two training processes.
Training the vision-language ML model by minimising a cross-entropy image-to-text loss between the third text embedding and the image embedding may comprise adjusting learnable parameters for the layer norm layers of the vision encoder 12 of the ML model. That is, as updating all the parameters of the model leads to overfitting and loss of zero-shot ability (i.e. the ability to recognise novel classes not seen during the pre-training), the present techniques adapt the vision encoder 12 to the target subdomain by adjusting the statistics learned by the layer norms present in the encoder. Specifically, layer normalisations of the vision encoder are fine-tuned to thereby train the vision encoder to, for each data pair, output image embeddings that are similar to the third text embeddings. The encoder itself is typically represented by a vision transformer architecture and is pretrained in an unsupervised manner via contrastive learning.

Training the vision-language ML model may further comprise learning how to reduce an impact of data distribution shift. Data distribution shift may arise when the image data used to pre-train the vision encoder is different to the images in the data pairs of the second dataset, which may be for a specific downstream task. Thus, the layer normalisation fine-tuning is performed to combat data distribution shift, as outlined above. However, after the fine-tuning is performed, the vision and text encoders may not be aligned. Thus, the method further comprises learning an offset or bias at the output of the text encoder which can be used to re-align the two encoders. Training the ML model may further comprise reducing an impact of data distribution shift by: learning an offset at the output of the text encoder for realigning the vision and text encoders; and adding the offset to weights of the text encoder. In other words, the ML model is trained to correct for the bias. The fine tuning and bias correction steps may preferably be performed simultaneously.

Figure 1F is a schematic diagram showing how the output (f) of the image encoder 12 and text encoder 12 are used to obtain a cross-entropy loss. Here, f is the image descriptor produced by the image encoder 12 given an input image 14. In Figure 1D, t is a text descriptor produced by the text encoder 12 from taking as input pairs of (soft prompts, class name). In total there are c (same as the number of classes) textual prompts, one for each class. The output of the training using the second training dataset is a cross-entropy loss $L_{VL}$ that forces the descriptor f to be classified correctly. The cross-entropy loss enforces that the image feature f will be correctly classified as class i, in effect maximising the similarity between the image descriptor and the corresponding text descriptor, corresponding to the i-th class name.

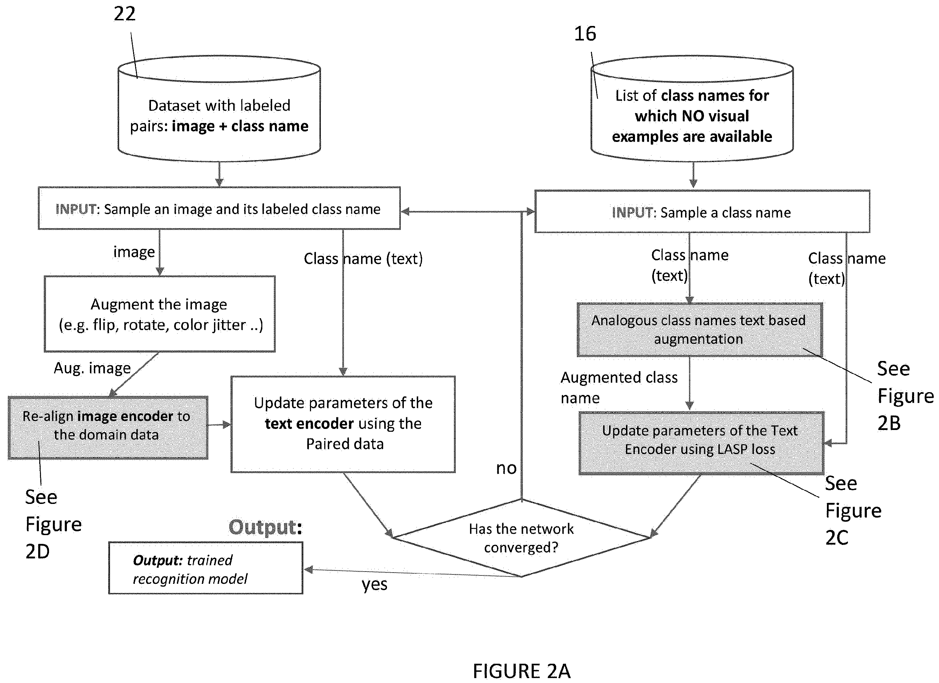

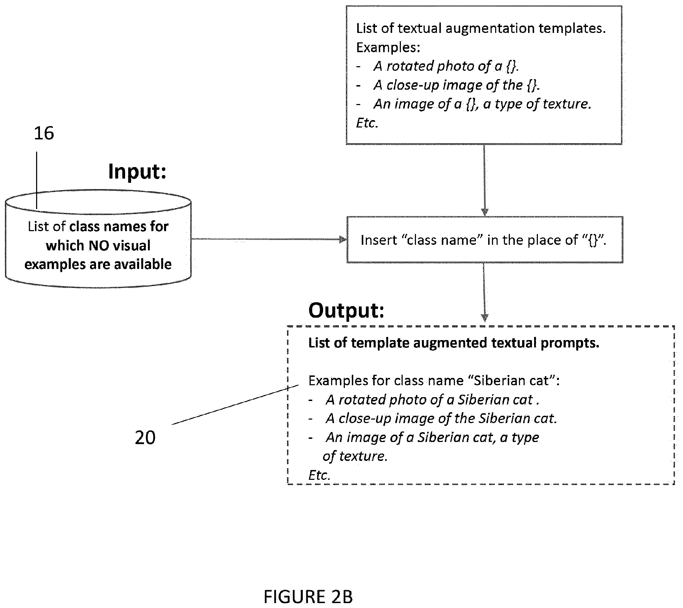

Figure 2A is a flow chart of example steps to train the present vision-language M L model. The process is explained in more detail with reference to Figures 2B to 2D.

Figure 2B shows the process to generate, for each class name 16A in the first training dataset 16, at least one augmented textual prompt 20. As mentioned above, text augmentation is analogous to image augmentation, where during training an image is transformed using a set of random transformations. Here, the class names are augmented. The augmented textual prompt is a sentence or short phrase that contains a class name of interest. For example, if the first training dataset 16 comprises the class name "bamboo forest", the augmented textual prompts generated using the class name may include "A rotated image of a bamboo forest", "A zoomed-in image of a bamboo forest", "A sketch of a bamboo forest", and so on. In this way, the class name is augmented by forming sentences or short descriptors using the class name. As the text encoder 10 is part of the vision-language model, the augmented textual prompts may be image-based, because the model is trying to classify images. These augmented textual prompts are then used alongside the original class names of the first training dataset to train the text encoder.

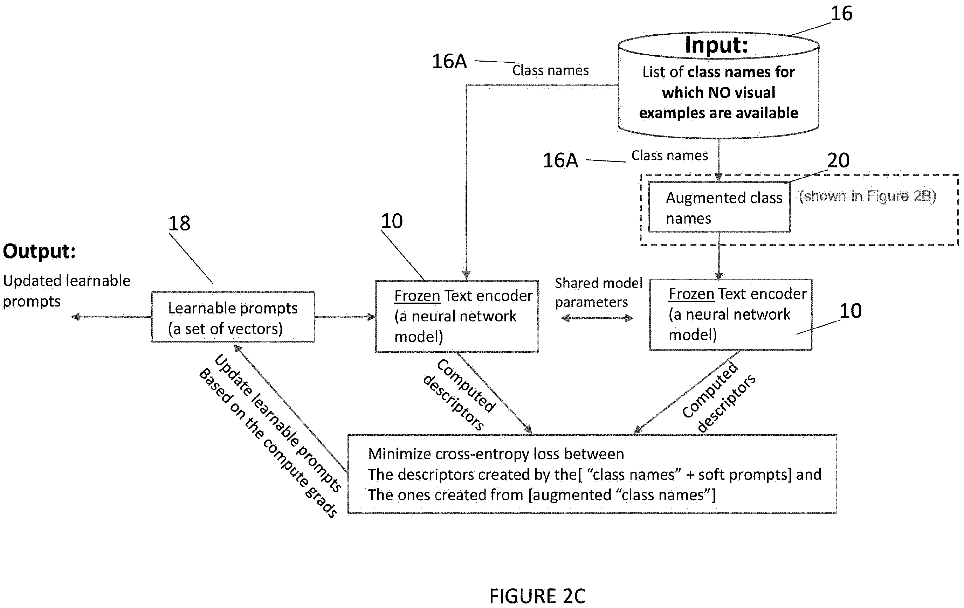

Figure 2C shows the process to train the ML model using the first training dataset 16. For the first time, the learnable parameters ("learnable prompts" in the figure) are optimized for an image recognition problem in the text-domain alone. This allows incorporation of novel classes, for which no visual samples are present, increasing significantly the zero-shot performance.

As shown, training the vision-language ML model comprises generating, for each class name 16A in the first training dataset, at least one augmented textual prompt 20. The at least one augmented textual prompt 20 is input into the frozen text encoder 10 of the ML model, and the frozen text encoder 10 outputs a first text embedding for each augmented textual prompt 20. The method comprises generating a plurality of first inputs by concatenating a learnable soft prompt, from a plurality of learnable soft prompts 18, to each class name 16A from the first training dataset 16. The class names 16A from the first training dataset 16 and the generated plurality of first inputs are input into the frozen text encoder 10 of the ML model, and the frozen text encoder 10 outputs a second text embedding for each class name 16A. The method then involves minimising a cross-entropy text-to-text loss between the first text embedding and the second text embedding. Minimising a cross-entropy text-to-text loss between the first text embedding and the second text embedding may comprise adjusting the learnable soft prompts. Thus, the output of this training using the first training dataset results in updated soft prompts. The learnable soft prompts 18 may be updated using gradient descent using the text-to-text loss between the first and second text embeddings.

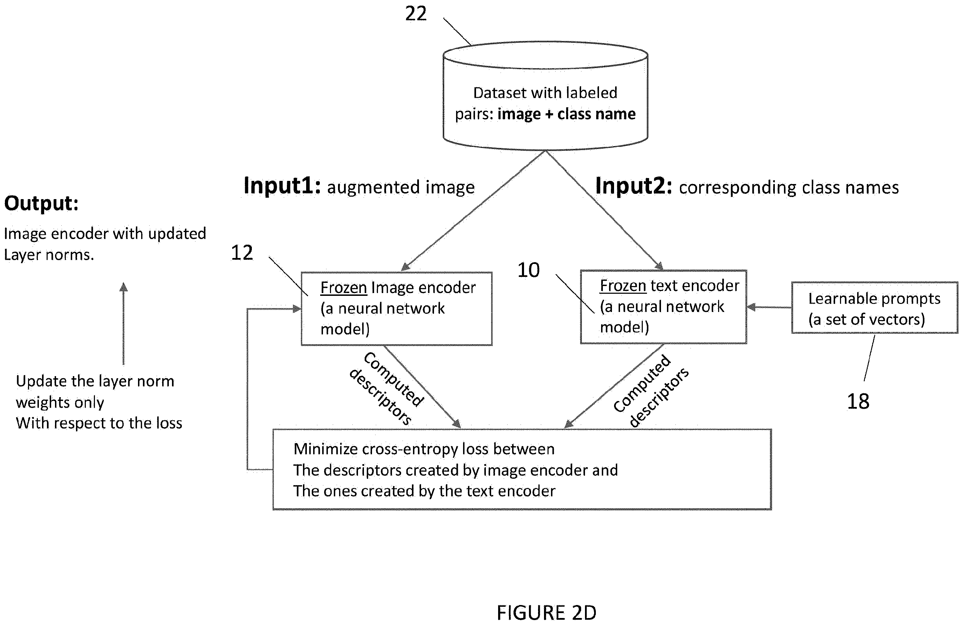

Figure 2D shows the process to train the ML model using the second training dataset 22. This involves realigning the image encoder 12 to the domain of interest by updating the layer norm weights only of the image encoder 12. This prevents overfitting, such that the image encoder 12 adapts to the new data distribution while maintaining the zero shot ability of the model. The input into the vision encoder 12 is an image 14. During training, the image 14 is obtained from a labelled dataset (i.e. the second training dataset containing pairs of data items, where each pair comprises an image and text). The vision encoder 12 processes the input image 14, identifies each object in the image, and for each object, outputs a d-dimensional feature vector (f). This feature vector is then used to classify the identified object.

To enable training of both the vision encoder and text encoder, the ML model is trained using the data pairs, where each data pair comprises an image 14 of an object and a corresponding text class name. However, the input into the text encoder is not simply the text class name from each data pair. Rather, the input into the text encoder is the text class names and a plurality of text inputs based on the text class names. The text inputs are generated using the text class names and learnable soft prompts 18. Thus, with the second training dataset available, training the vision-language ML model may further comprise generating a plurality of second inputs by concatenating each learnable soft prompt, from the plurality of learnable soft prompts 18, to each class name from the data pairs in the second training dataset. The class names from the second training dataset and the generated plurality of second inputs are then input into the frozen text encoder 10 of the ML model. The frozen text encoder 10 outputs a third text embedding for each class name. Training the vision encoder 12 of the ML model comprises inputting the images 14 in each data pair of the second training dataset into the vision encoder 12, and outputting an image embedding for the object in each input image from the data pairs. The training method then involves minimising a cross-entropy text-to-text loss between the third text embeddings and the image embeddings.

As shown in Figure 2D, the input into the image encoder 12 may be an augmented version of an image 14 from the second training dataset 22. An image 14 from a data pair is augmented using one or more possible augmentation techniques. The augmentation may result in a synthetically-generated version of the original image in the data pair. The vision encoder then processes the augmented image to output an image embedding for each object in the augmented image. The text class name in the corresponding data pair provides the ground truth. The image from the data pair may be augmented by applying at least one image transformation, such as rotation, tilting, flipping about an axis, enlarging, etc. The image from the data pair may be augmented by altering an appearance of the image by applying one or more of: a change in colour distribution, noise, Gaussian noise, a blur, motion blur, zoom blur, simulated weather effects, simulated changes in lighting, etc. The image from the data pair may be augmented by inserting an object into the image, which could be non-overlapping or partially-overlapping with the object in the original image.

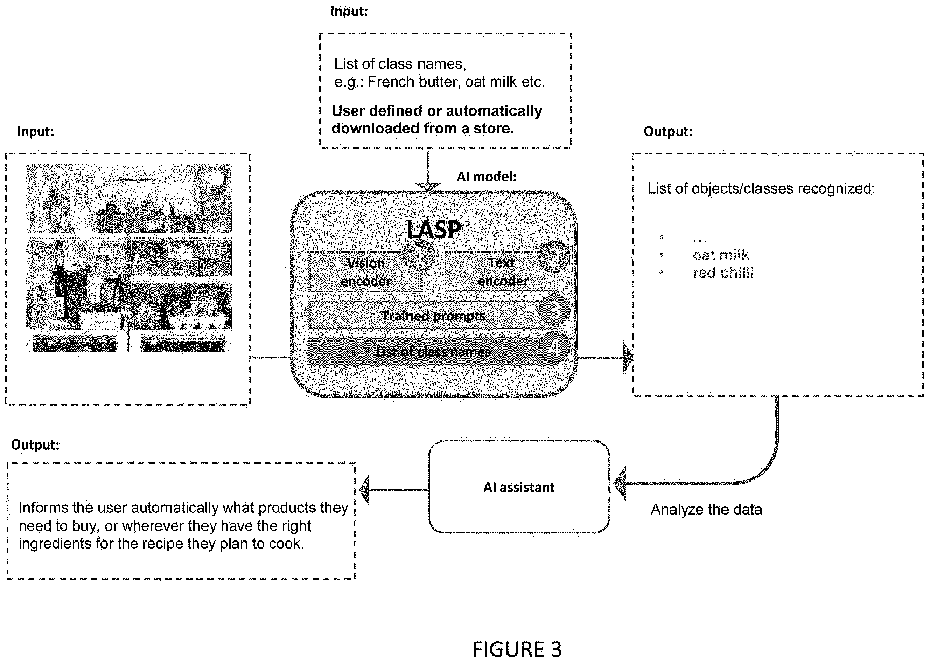

Figure 3 is a schematic block diagram of how the trained ML model may be used to classify images using depicting novel or known classes. One input into the trained ML model is at least one input text data item containing at least one class name. The trained vision-language ML model generates, using a text encoder 10 of the ML model, a text embedding representing each class name in the input text data item. The trained ML model has access to a list of existing, known class names. The trained ML model compares the generated text embedding(s) to text embeddings of the known class names to determine whether the/each generated text embedding is novel. The trained ML model adds, when the generated text embedding for a class name is novel, the class name and the corresponding generated text embedding to the list. For example, in Figure 3, the model has access to a list of class names, and the user input text data items comprise novel classes "French butter" and "oat milk".

The model may receive at least one image, which may be a static image or a frame of a video. In Figure 3, the image of the inside of a fridge. The ML model identifies, using the image encoder 12 of the ML model, at least one object in each input image, and generates, using the vision encoder, an image embedding for each identified object. The ML model compares the image embedding for each identified object with text embeddings corresponding to each class in the list of class names, to determine a similarity, and outputs, using the comparison, a class name for each identified object in the input image based on the most similar embeddings. In other words, the ML model outputs a class name for each identified object in the input image, where the class name may be a class name that the model was trained to recognise, or a novel class name that the model has received after training. In this example, the ML model outputs "oat milk" and "red chilli" for example, which it has identified and classified within the input image.

The vision-language model may be used for a variety of purposes. For example, one use case involves a robot or other electronic device that has a camera (e.g. a smart fridge with a camera, a robot vacuum cleaner, etc.). The ML model is provided on the device to enable the device to automatically recognise novel objects of interest, without user-provided visual examples of those novel objects. Instead, the device is simply provided with a list containing the names of the classes of interest. This allows the device to identify new objects without having to be updated first. Advantageously, this enables recognition of novel objects based just on a list of class names. The names can be user defined or automatically obtained (e.g. by downloading the product names found on a retailer webpage). That is, a user could input the text data item, or the text data item could be downloaded from an external source. For example, the external source may be an online food recipe that the user is following, or from a supermarket or other shop. Alternatively, the model also has the capacity to adapt on-device based on a few examples (image + its class name).

As shown in Figure 3, the vision-language model may be used in conjunction with another model. In this example, the vision-language model is used in conjunction with an AI assistant, wherein the class name output from the vision-language ML model is input into the AI assistant for processing. Thus, in some cases, the output of the vision-language model may be output directly to a user, while in other cases, the output may be used to control another entity or device, and in other cases, the output may be input into another model (such as an AI assistant model). In this example, the AI assistant may inform the user of which products they need to buy, so that the user does not buy food products they already have, or so that the user can be alerted to buy something they have run out of. The AI assistant may inform the user of whether they have all the necessary ingredients to cook a recipe they plan to cook.

In some cases, the AI assistant may be an AI cooking assistant. In such cases, the ML model may receive a plurality of input text data items comprising ingredients from a target recipe, and at least one image of a user following the target recipe. The trained vision-language ML model may identify objects in the at least one image corresponding to the ingredients. The AI assistant may then use the identified objects to provide instructions to the user. For example, the at least one image may be frames of a real-time video of a user performing steps of a recipe to make an apple pie. The user may be performing a step of the recipe which involves cutting apples for the apple pie. The vision-language ML model may receive the list of ingredients as an input text data item. The model may receive the method steps as an input text data item too (which refer to the ingredients and utensils/equipment needed). The vision-language ML model may identify and classify, using just the input text data item(s), the objects in the video frames corresponding to classes in the input text data item(s). For example, the ML model may identify apples and a knife. The classified images may be provided to the AI cooking assistant so that the AI cooking assistant model can determine what step of the recipe the user is at, and provide the user with tips to perform that step. The AI cooking assistant may also be able to provide the user with instructions about the next step to perform.

The electronic device may be a smartphone, which has a storage comprising a plurality of images. For example, the storage may comprise a photo gallery. In this case, the ML model may receive an input text data item indicating an object or class to be identified in the plurality of images, and the trained vision-language ML model may analyse the images in the storage and output at least one image from the plurality of images corresponding to the input text data item. Thus, the ML model enables fast photo gallery search to be performed based on input text data items only (i.e. a novel class in text form).

The vision-language model, LASP, may be interpreted in a number of ways which are now described.

LASP as a language-based augmentation. Current soft prompt-based methods restrict the augmentation to the vision domain, where random transformations such as rotation, colour jittering or scaling increase the robustness of the system, especially for cases with limited number of training samples. However, no augmentations are performed in the language domain. Ideally, it is desirable that the prompt-conditioned text embedding is robust too, capturing the full space of each class. In practice this can be achieved by targeted prompting, where certain characteristics can be specified, or apply text-based transformation to the class name, e.g.: "A sketch of *dog*" or "A rotated photo of a *dog*". At train time, as reflected by Eq. 6 the model needs to correctly distinguish between the prompt $t_i$ and the $C$ prompts formed by combining the $C$ class names with one of the sentences from the set $\zeta$. Additionally, the the class label distribution per $l$-th template is computed and then averaged over all templates. Notice that the sentences/templates used for augmentation are not mixed, as the model needs to focus on the class information, instead of relying on augmentation (i.e.: the model may distinguish easier between a "a sketch of a *dog*" and "a photo of a wolf" than "a sketch of a dog" and "a sketch of a wolf", as in the first case, the style could be used as an additional queue). This has been validated experimentally, and was found to be the case on the tested datasets. Intermixing templates was found to impact the performance on novel classes by 0.5%.

LASP as a reaularizer. Even when using a small number of parameters, especially on a few-shot setting, the resulting models (prompts) can still manifest symptoms consistent with overfitting to base classes. As the proposed language-aware loss in the encourages the new, learned prompts to be close in the embedding space to the textural ones, the present techniques can be naturally viewed in part as a regularizer that prevents the prompt-conditioned features from diverging too much from the predefined, hand-crafted language queries.

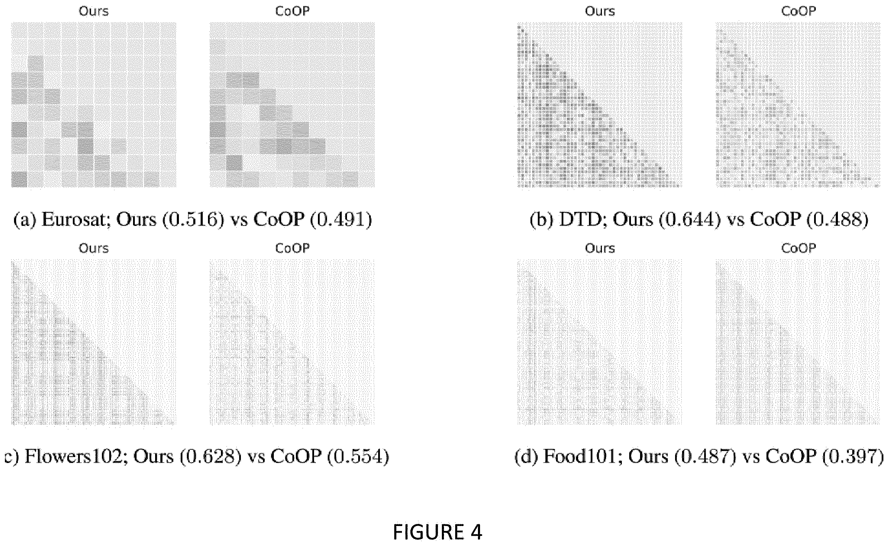

LASP as a feature discriminator learner. By optimizing with respect to both image and text features, the present techniques produce class centroids that are more discriminative and have a higher separation margin. This effect can be visualised in Figures 4A to 4D where the cosine distance is measured between the embeddings of each class from the testing set. Generally, the present techniques learn embeddings/class centroids that have a higher cosine distance than the baseline, CoOp.

Figures 4A to 4D show experimental data of the performance of the present vision-language ML model ("ours", i.e. LASP) compared with an existing model (CoOP). Specifically, Figures 4A to 4D show the cosine distance between all the text class embeddings produced by the CLIP text encoder on the Eurosat, DTD, Flowers102, and Caltech101 datasets. Clusters situated further apart are more discriminative as the underlying image features are identical across both methods. Each figure also indicates the average cosine distance between the classes. Brighter colours/shades indicate bigger cosine distances.

LASP as data-free distillation. Typically, knowledge distillation requires a training set of images, where a teacher network provides a training signal for the student. The text-to-text loss of the present techniques can be also interpreted as a data-free distillation ( does not use any image data) where the learnable prompts define the "samples". As CLIP learns a joint vision-language space, similar concepts are close together across both domains. Hence, optimizing against a concept or object in the language domain, using the proposed loss, should also help make a step in the visual domain, improving the classification of the images.

Grouped LASP. Grouped convolutions and multi-head attention have been shown to learn strong representations. The groups or the number of heads, respectively, can be also interpreted as a set of experts that are then combined to produce a strong feature. Drawing inspiration from this, grouped prompt representation is proposed, where each group is optimized with respect to a separate subset of textual prompts. Effectively, the prompts from each group will learn a transformation specialized to its corresponding subset (analogous to the aforementioned techniques that also specialize to a part of the signal). In particular, the set of $L$ templates is split into $G$ equally sized sub-sets. Moreover, each sub-set is associated with a sequence of $M$ prompts $\mathbf{r}_c^g = \{\mathbf{p}_1^g, ..., \mathbf{p}_M^g, w_c\}$, $g = 1, ..., G$ each producing a class specific text feature $\mathbf{t}_c^{r,g} = g_T(\mathbf{r}_c^g)$. Finally, the text-to-text loss in Eq. (5) becomes

$$\mathcal{L}_{TT-G} = -\sum_{g=1}^{G} \sum_{c=1}^{C} \log P_{rh}^g(c|\mathbf{t}^g)y_c, \qquad (7)$$

with $P_{rh}^g$ computed for each group similarly to Eq. (4). The splits were created randomly. As the text templates are in general semantically independent, no preferred grouping arises. At test time, the final result is computed by taking the average of the cosine similarity scores between each group and the visual feature **f**.

Re-aligning LASP: Combating data distribution shift. For some downstream tasks, it is possible that there is a data distribution shift between the downstream image dataset and the one used by CLIP during training. Hence, it is desirable for this aspect to be captured by the downstream adaptation method. To this end, some optimization of the visual encoder can be performed; nevertheless this can very easily result in base class overfitting if, after the training, the vision-language embeddings are pushed away from the joint space learned by CLIP. For example, preliminary results with visual adapters have shown that they hurt zero-shot accuracy. On the contrary, it was found that Layer Normalization (LN) fine-tuning is a much more robust way to adapt the visual encoder. Overall, fine-tuning the LN of the CLIP encoder is proposed as a way to combat distributional shift.

Combating vision-language misalignment. Because after LN fine-tuning the vision and language are not guaranteed to continue to be aligned, the present techniques learn a "correction" at the output of the text encoder in the form of a learnable offset (bias) that aims to re-align the two modalities. Let **W** be the set of weights of the linear classifier obtained by passing the learned prompts from the text encoder. The present techniques learn a vector $\mathbf{b} \in \mathbb{R}^d$ that is simply added to **W**, that is **W** = **W** + **b**. Importantly, the learned offset is shared among all classes, and in this way it can be readily applied for the case of novel classes too

Language Aware Soft Prompting with virtual classes (LASP-V). A direct observation that can be drawn from Eq. 4 is that in practice it is not necessary to restrict the set $V$ only to the class names for which annotated images exist, as its value is independent of the input image. To this end, the present techniques learn the prompts using both annotated image-text pairs and class names situated outside of the base set, for which no images are available. This creates a mixed few-shot and zero-shot setting that combines the best of the both words: the guidance from the fewly annotated samples and the generalizability of zero-shot. It is shown in the results section that this small addition can significantly improve the robustness of the prompts learned. To distinguish between LASP, trained on few-shot data only, the variation of this method trained on the mix of zero-shot and few-shot is referred to as training LASP with virtual classes (LASP-V). Note that training with virtual classes does not violate the zero-shot setting. Moreover, from a practical perspective, if the novel class names are not known during initial training, the model can be simply retrained in a zero-shot manner when they become available.

Experiments. Following Radford et al and Zhou et al (CoCoOP), the accuracy of the present techniques on generalisation to novel classes (i.e. zero-shot recognition) is evaluated for 11 datasets. Each dataset is split into two equal partitions with disjoint classes, named base and new. The present model (LASP) is trained using text-image pairs from the base classes and tested on both base and new classes.

Models. For all experiments unless otherwise specified a pretrained CLIP model is used with a ViT-B/16 image encoder, $M = 4$ learnable prompts and 16 samples per class. For all experiments, the average across three runs is reported. The number of groups G (when used) is set to 3. In all experiments, the average across 3 runs is reported.

Datasets Following CoOP, experiments are performed on the 11 datasets also used in CLIP, namely: ImageNet, Caltech101, Oxford-Pets, Stanford Cars, Flowers102, Food101, FGVC Aircraft, SUN397, DTD, EuroSAT and UCF-101.

Training Largely, the training procedure described in CoOp and CoCoOp is used (i.e. same image augmentation, SGD with a initial learning rate of 0.002 and a cosine annealing scheduler with 1 epoch of warm-up). In Eq. 8 $\alpha_{VL}$ was set to 1 and $\alpha_T$ to 20. The number of soft prompts to 4 and the number of textual templates $L$ size to 34, with the templates taken from CoOP and CLIP (see supplementary material for a full list). All training and testing was done on a single nVIDIA V100 GPU while the code was implemented using PyTorch.

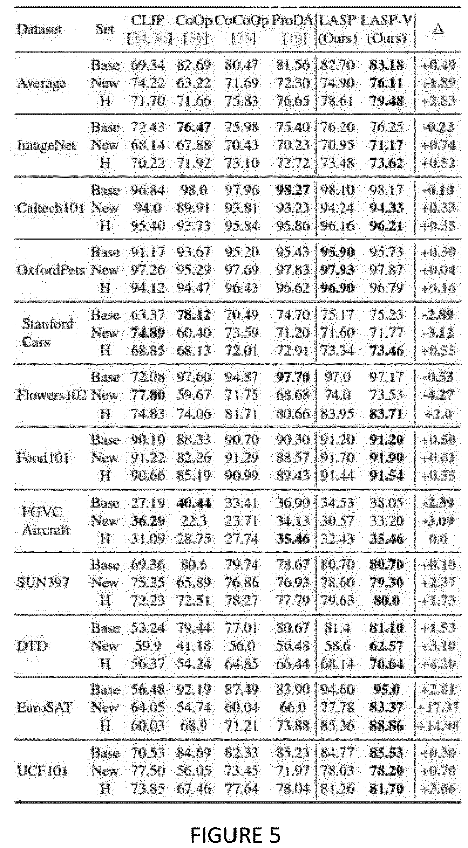

Results. Figure 5 compares the present techniques with the current state-of-the-art, with the results for both LASP and LASP trained with virtual classes (LASP-V) shown. All learning-based methods using 4 soft prompts and are trained using 16 samples for each base class. The present techniques, LASP, surpass significantly both the direct baseline, CoOP, and stronger image-conditioned methods such as CoCoOP, despite not using any. Moreover, the results of LASP matches and surpasses CLIP performance on novel classes.

As the results show, the present techniques significantly outperform its direct baseline, CoOp on the new classes, across all 11 datasets, while largely matching the accuracy on the base classes. Moreover, the proposed LASP+ that combines few shot (on the base classes) and zero shot learning (for the new classes), surpasses both CoOp and the stronger CoCoOp followup that is conditioned on the image features. Notice that stronger gains are observed on datasets with informative class names, such as EuroSAT or UCF101, and lower on ones containing less informative or more challenging class naming, such as FGVCAircraft, where the model number in isolation is less informative. Finally, the present techniques are the first to consistently outperform CLIP baseline with hand crafted prompts across the novel classes.

As the results further show, in terms of harmonic mean, the present techniques outperform all methods by a large margin. It outperforms, on average, the second best (ProDA) by > 2%. The improvement on specific datasets is even bigger (e.g. > 3% on Flowers102, > 11% on EuroSAT, > 3% on UCF101).

On the novel classes, the present techniques outperform all methods by a large margin. It is the first reported method outperforming CLIP by 0.68% (but note that CLIP performs very poorly on the base classes). It also outperforms ProDA (third best) by > 2.5%. Again, compared to ProDA, the improvement on specific datasets is even bigger (e.g. > 5% on Flowers102, > 3% on Food101, > 11% on EuroSAT, > 6% on UCF101). On new classes, LASP with virtual classes (LASP-V) has significant impact for specific datasets. These include datasets with informative class names like EuroSAT and DTD where the improvement over LASP is ~ 5.5% and ~ 4.0%, respectively.

Generalized zero-shot setting: The current evaluation protocol used in CoCoOp computes the accuracy considering the base and new classes in isolation. A more realistic evaluation protocol should consider the classes across both subsets (i.e. base and novel) jointly. Detailed results for this setting are provided in the supplementary material but, in general, the same conclusions as above hold.

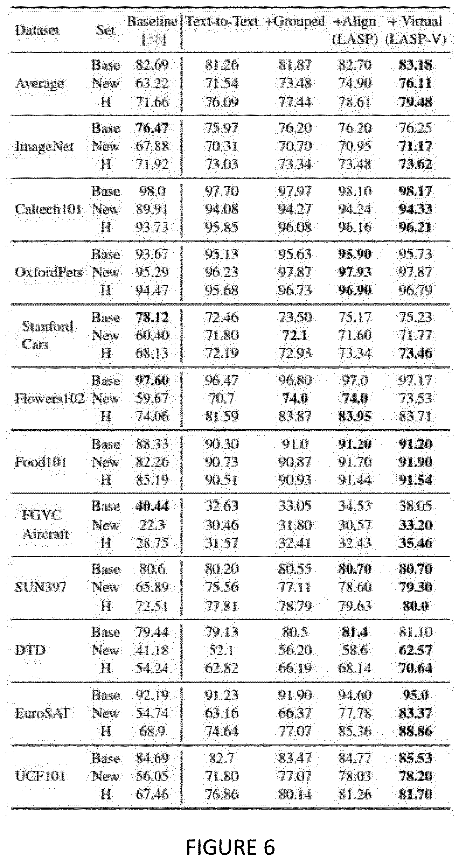

Ablation studies: Effect of different LASP components. LASP proposes a number of contributions which are evaluated incrementally. The start point is the proposed Text-to-Text loss of Eq. (7). On top of this, we incrementally apply the grouped prompt representation (Eq. (9)), and then the re-alignment module. This gives rise to LASP. Finally, the virtual classes are added giving rise to LASP-V, and the baseline is CoOp. As the results in Figure 6 show, the present techniques outperform the baseline by a large margin. Specifically, the present techniques improve upon CoOp by ~ 4.5% on average, demonstrating its effectiveness. The results in Figure 6 further show that all components are needed to obtain high accuracy.

Effect of size and content on the textual prompts: Herein, the effect of the size L and the content of the set of the textual prompts used by the present techniques in Eq. (6) is studied. For simplicity, the results are reported using the Text-to-Text loss (Eq. (7)), only. The hand-crafted templates are increased to 100 by including the rest of the prompts defined in CLIP, while their number is reduced to 1 by using the following template only: a photo of {}. Random templates are produced by sampling grammatically plausible random sentences that contain incoherent words, with length between 5 and 20 words. The class names are inserted at the end of these random templates (for examples, see supplementary material). All variations use the same training scheduler and hyperparameters, except for the case of random templates,

where $\alpha_{TT}$ = 5.

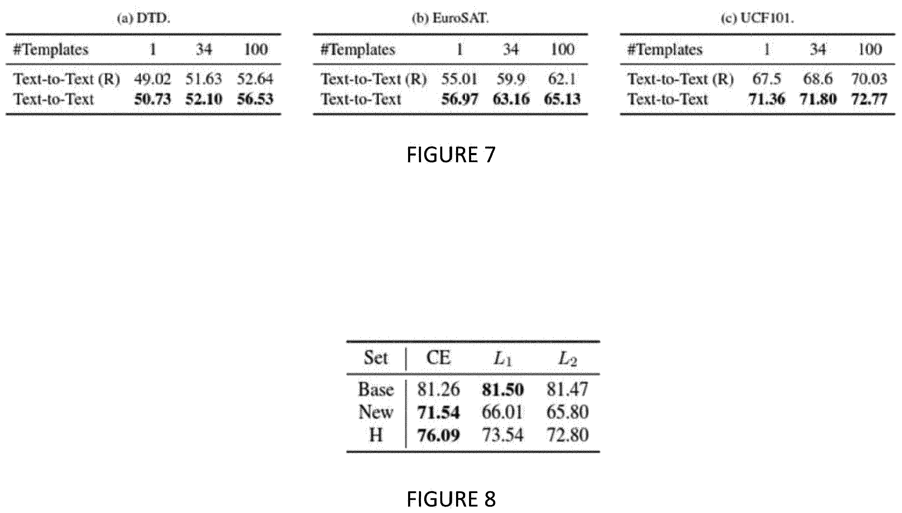

As the results in Figure 7 show, the exact choice of the templates might not be so significant for the few-shot setting. The results further show that for the case of novel classes, both the number and the content of the templates are important to obtain high accuracy. It is noted that the accuracy on the base classes remains similar across all settings (not showin in Figure 7).

Effect of type of loss: In Figure 8, the choice of loss in the present techniques is varied. The cross-entropy (CE) is replaced with an $L_2$ and $L_1$ loss. Again, for simplicity, results are reported using the Text-to-Text loss only. The results in Figure 8 further show that the proposed CE loss-based formulation outperforms other losses in the context of the present techniques.

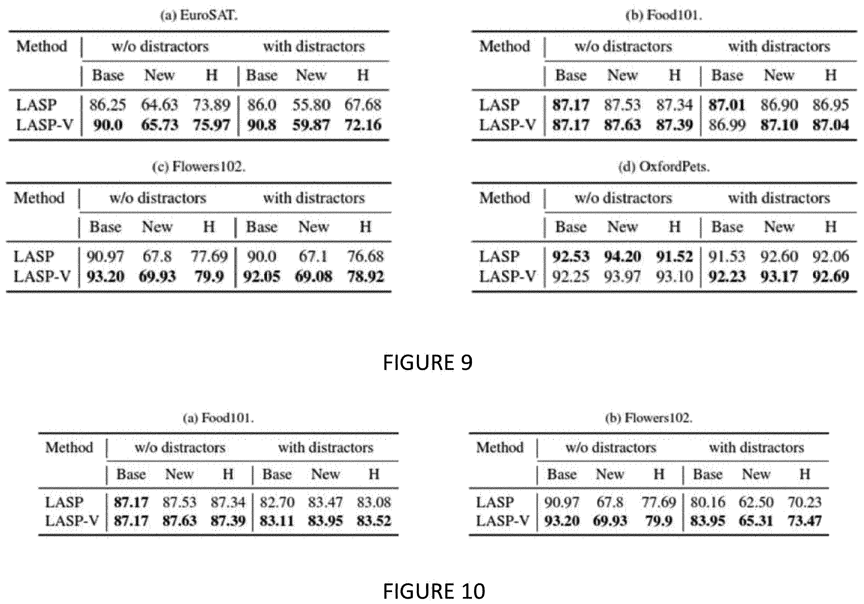

Effect of out-domain distractors: Motivated by other work suggesting that CLIP's performance drops as the number of classes used for testing increases, a new evaluation setting is introduced: Firstly, 4 test datasets are selected with clear disjoint domains: EuroSAT (10 satellite terrain types), Food101 (101 food names), Flowers102 (102 flower names) and OxfordPets (37 dog and cat breed names). At test time, classifier is defined across the union of classes across all 4 datasets (250 classes in total). Note that LASP-V is the only method that benefits from knowledge of this expanded vocabulary during training. From Figure 9, it can be concluded that the present techniques are somewhat robust to out-of-domain distractors. Specifically, the drop in accuracy is moderate (typically 1-2%). The exception is EuroSAT where the number of classes increases 25 $\times$. Importantly, LASP-V manages to largely recover the lost accuracy.

Effect of in-domain distractors: Expanding on the idea from the previous section, herein, performance of the current soft prompting methods is tested with in-domain distractors. Unlike the case of out-of-domain distractors, the in-domain distractors are selected such that they are closely related to the current dataset/classes being part of the same super-category. The experiments were performed on two datasets: Food101 and Flowers102. For Flowers102, we added 65 new class names while, for Food101, 53 new classes. Note again that, except for LASP-V, the classes are only used at test time as distractors expanding the C-way classifier by 65 and 53, respectively. The list of added classes can be found in the supplementary material. From the results show in Figure 10, it can be concluded that in-domain distractors significantly increase the problem difficulty. Specifically, the drop in accuracy is large (4-7%). LASP-V manages to recover part of the lost accuracy.

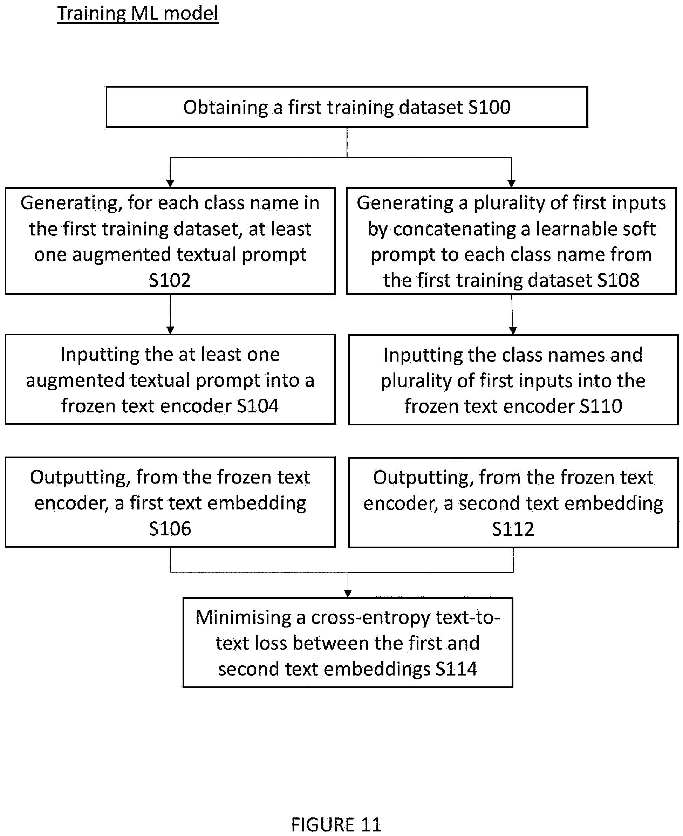

Figure 11 is a flowchart of example steps to train a vision-language ML model using the present techniques to classify images depicting novel or known classes. The training method comprises: obtaining a first training dataset comprising a plurality of class names (S100); and training the vision-language ML model by: generating, for each class name in the first training dataset, at least one augmented textual prompt (S102) to condition the vision-language ML model to output a class name for an object detected in an image; inputting the at least one augmented textual prompt into a frozen text encoder of the ML model (S104); outputting, from the frozen text encoder, a first text embedding for each augmented textual prompt (S106), the first text embedding representing the class name in the augmented textual prompt; generating a plurality of first inputs by concatenating each learnable soft prompt, from a plurality of learnable soft prompts, to each class name from the first training dataset (S108); inputting the class names from the first training dataset and the generated plurality of first inputs into the frozen text encoder of the ML model (S110); outputting, from the frozen text encoder of the ML model, a second text embedding for each first input (S112) the second text embedding representing the class name in each first input; and minimising a cross-entropy text-to-text loss between the first text embedding and the second text embedding (S114), to thereby train the learnable soft prompts to be similar to the augmented textual prompts. The method may be performed by a server.

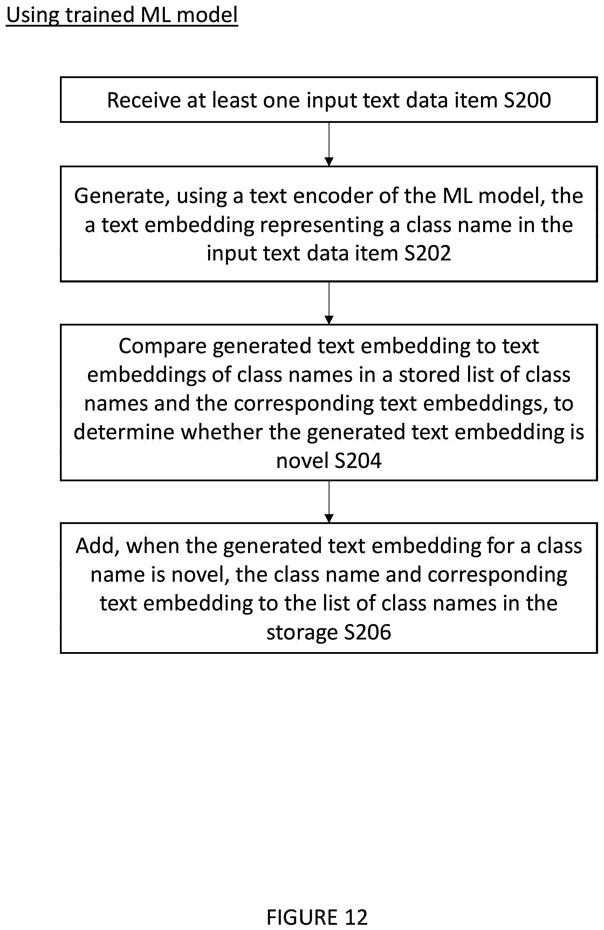

Figure 12 is a flowchart of example steps to use a trained vision-language ML model to perform a vision-language task. The method may comprise: receiving at least one input text data item containing at least one class name (S200). The method may comprise using the trained vision-language ML model to: generate, using a text encoder of the ML model, a text embedding representing each class name in the input text data item (S202); compare the generated text embedding to text embeddings of class names in a stored list of class names and the corresponding text embeddings, to determine whether the generated text embedding is novel (S204); and add, when the generated text embedding for a class name is novel, the class name and the corresponding text embedding to the list of class names in the storage (S206).

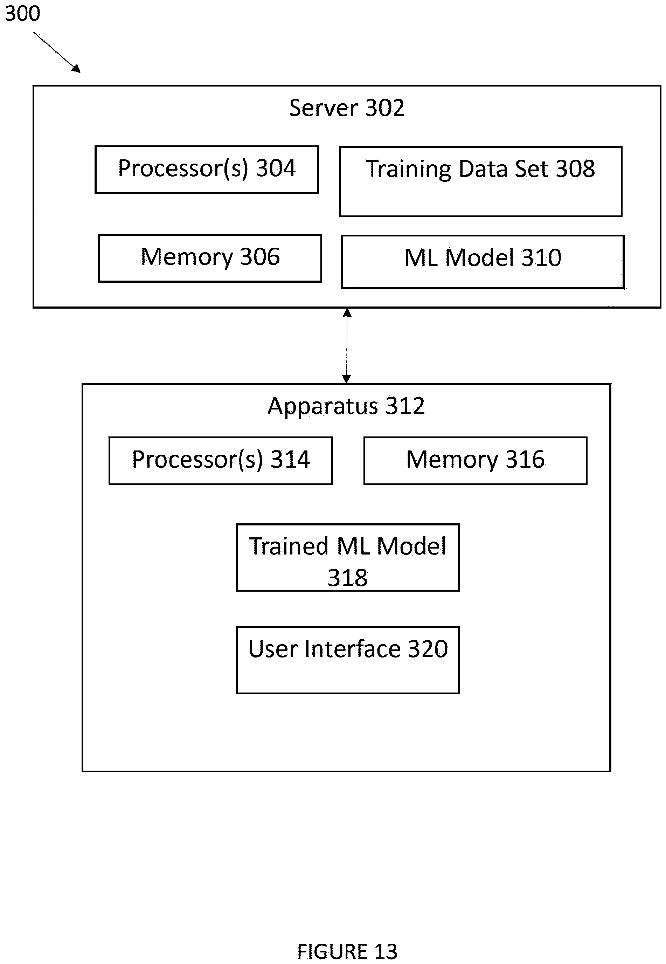

Figure 13 is a block diagram of a system 300 for training and using a ML model to perform a vision-language task.

The system 300 comprises a server 302 for training a vision-language machine learning, ML, model to classify images. The server 302 comprises: at least one processor 304 coupled to memory 306. The at least one processor 304 may be arranged to perform the method described above with respect to Figures 1A to 2D.

The system 300 comprises an apparatus 312 for using a trained vision-language machine learning, ML, model 318 to perform a vision-language task, the apparatus 312 comprising: a user interface 320 for receiving at least one input data item, wherein the input data item is an image or text; and at least one processor 314 coupled to memory 316 arranged to: use the trained vision-language ML model to analyse the at least one received input data item; and output at least one response to the input data item using the trained-vision language ML model.

The apparatus 312 may be any one of: a smartphone, tablet, laptop, computer or computing device, virtual assistant device, a robot or robotic device, a robotic assistant, image capture system or device, an Internet of Things device, and a smart consumer device. It will be understood that this is a non-limiting and non-exhaustive list of apparatuses.

The at least one processor 314 may comprise one or more of: a microprocessor, a microcontroller, and an integrated circuit. The memory 316 may comprise volatile memory, such as random access memory (RAM), for use as temporary memory, and/or non-volatile memory such as Flash, read only memory (ROM), or electrically erasable programmable ROM (EEPROM), for storing data, programs, or instructions, for example.

References:

- Contrastive Language-Image Pre-training (CLIP) model- Alec Radford, Jong Wook Kim, Chris Hallacy, Aditya Ramesh, Gabriel Goh, Sandhini Agarwal, Girish Sastry, Amanda Askell, Pamela Mishkin, Jack Clark, et al. Learning transferable visual models from natural language supervision. In International Conference on Machine Learning, pp. 8748-8763. PMLR, 2021.
- CoOp - Kaiyang Zhou, Jingkang Yang, Chen Change Loy, and Ziwei Liu. Learning to prompt for vision-language models. International Journal of Computer Vision, 130(9):2337-2348, 2022b
- CoCoOp - Kaiyang Zhou, Jingkang Yang, Chen Change Loy, and Ziwei Liu. Conditional prompt learning for vision-language models. In Proceedings of the IEEE/CVF Conference on Computer Vision and Pattern Recognition, pp. 16816-16825, 2022a
- Radford et al - Alec Radford, Jeffrey Wu, Rewon Child, David Luan, Dario Amodei, Ilya Sutskever, et al. Language models are unsupervised multitask learners. OpenAI blog, 1(8):9, 2019
- ImageNet - Jia Deng, Wei Dong, Richard Socher, Li-Jia Li, Kai Li, and Li Fei-Fei.Imagenet: A large-scale hierarchical image database. In 2009 IEEE conference on computer vision and pattern recognition, pages 248-255. Ieee, 2009
- Caltech101 - Li Fei-Fei, Rob Fergus, and Pietro Perona. Learning generative visual models from few training examples: An incremental bayesian approach tested on 101 object categories. In 2004 conference on computer vision and pattern recognition workshop, pages 178-178. IEEE, 2004
- Oxford-Pets - Omkar M Parkhi, Andrea Vedaldi, Andrew Zisserman, and CV Jawahar. Cats and dogs. In 2012 IEEE conference on computer vision and pattern recognition, pages 3498-3505. IEEE, 2012
- Stanford Cars - Jonathan Krause, Michael Stark, Jia Deng, and Li Fei-Fei. 3d object representations for fine-grained categorization. In Proceedings of the IEEE international conference on computer vision workshops, pages 554-561, 2013
- Flowers102 - Maria-Elena Nilsback and Andrew Zisserman. Automated flower classification over a large number of classes. In 2008 Sixth Indian Conference on Computer Vision, Graphics & Image Processing, pages 722-729. IEEE, 2008.
- Food101 - Lukas Bossard, Matthieu Guillaumin, and Luc Van Gool. Food-101-mining discriminative components with random forests. In European conference on computer vision, pages 446-461. Springer, 2014
- FGVC Aircraft - Subhransu Maji, Esa Rahtu, Juho Kannala, Matthew Blaschko, and Andrea Vedaldi. Fine-grained visual classification of aircraft. arXiv preprint arXiv:1306.5151,2013.
- SUN397 - Jianxiong Xiao, James Hays, Krista A Ehinger, Aude Oliva, and Antonio Torralba. Sun database: Large-scale scene recognition from abbey to zoo. In 2010 IEEE computer society conference on computer vision and pattern recognition, pages 3485-3492. IEEE, 2010.
- DTD - Mircea Cimpoi, Subhransu Maji, Iasonas Kokkinos, Sammy Mohamed, and Andrea Vedaldi. Describing textures in the wild. In Proceedings of the IEEE conference on computer vision and pattern recognition, pages 3606-3613, 2014.
- EuroSAT - Patrick Helber, Benjamin Bischke, Andreas Dengel, and Damian Borth. Eurosat: A novel dataset and deep learning benchmark for land use and land cover classification. IEEE Journal of Selected Topics in Applied Earth Observations and Remote Sensing, 12(7):2217-2226, 2019.
- UCF-101 - Khurram Soomro, Amir Roshan Zamir, and Mubarak Shah. Ucf101: A dataset of 101 human actions classes from videos in the wild. arXiv preprint arXiv:1212.0402, 2012.
- ProDA - Yuning Lu, Jianzhuang Liu, Yonggang Zhang, Yajing Liu, and Xinmei Tian. Prompt distribution learning. In IEEE Conference on Computer Vision and Pattern Recognition, 2022.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

**Claims**

1. A computer-implemented method for training a vision-language machine learning, ML, model to classify images depicting novel or known classes, the method comprising:

   obtaining a first training dataset comprising a plurality of class names; and
   training the vision-language ML model by:

   generating, for each class name in the first training dataset, at least one augmented textual prompt to condition the vision-language ML model to output a class name for an object detected in an image;
   inputting the at least one augmented textual prompt into a frozen text encoder of the vision-language ML model;
   outputting, from the frozen text encoder, a first text embedding for each augmented textual prompt, the first text embedding representing the class name in the augmented textual prompt;
   generating a plurality of first inputs by concatenating each learnable soft prompt from a plurality of learnable soft prompts, to each class name from the first training dataset;
   inputting the class names from the first training dataset and the generated plurality of first inputs into the frozen text encoder of the vision-language ML model;
   outputting, from the frozen text encoder of the vision-language ML model, a second text embedding for each first input, the second text embedding representing the class name in each first input; and
   minimising a cross-entropy text-to-text loss between the first text embeddings and the second text embeddings, to thereby train the learnable soft prompts to be similar to the augmented textual prompts.

2. The method as claimed in claim 1 wherein minimising a cross-entropy text-to-text loss between the first text embeddings and the second text embeddings comprises adjusting the learnable soft prompts so that, for each class name, the second text embedding is similar to the first text embedding.

3. The method as claimed in claim 1 or 2, wherein generating at least one augmented textual prompt comprises:

   selecting at least one manually-defined augmentation template from a plurality of augmentation templates, each augmentation template being a text phrase into which a class name is insertable; and
   inserting a class name from the first training dataset into the selected at least one augmentation template, thereby generating at least one augmented textual prompt.

4. The method as claimed in claim 3 wherein selecting at least one augmentation template comprises selecting at least one group of augmentation templates.

5. The method as claimed in any preceding claim further comprising:

   obtaining a second training dataset comprising a plurality of data pairs, each data pair comprising an image depicting an object and a class name for the object;
   wherein training the vision-language ML model further comprises:

   generating a plurality of second inputs by concatenating each learnable soft prompt from the plurality of learnable soft prompts, to each class name from the data pairs in the second training dataset;
   inputting the class names from the second training dataset and the generated plurality of second inputs into the frozen text encoder of the vision-language ML model;
   outputting, from the frozen text encoder of the vision-language ML model, a third text embedding for each second input, the third text embedding representing the class name in each second input;
   inputting into a vision encoder of the vision-language ML model the images in each data pair of the second training dataset;
   outputting, from the vision encoder, an image embedding for the object in each input image; and
   minimising a cross-entropy image-to-text loss between the third text embeddings and the image embeddings.

6. The method as claimed in claim 5 wherein training the vision-language ML model by minimising a cross-entropy image-to-text loss between the third text embeddings and the image embeddings comprises fine-tuning layer normalisations of the vision encoder of the ML model, to thereby train the vision encoder to, for each data pair, output image embeddings that are similar to the third text embeddings.

7. The method as claimed in claim 6 wherein training the vision-language ML model further comprises reducing an impact of data distribution shift by:

learning an offset at the output of the text encoder for realigning the vision and text encoders; and
adding the offset to weights of the frozen text encoder.

8. The method as claimed in claim 5, 6 or 7 wherein training the vision-language ML model by minimising a cross-entropy image-to-text loss between the third text embeddings and the image embeddings comprises adjusting the learnable soft prompts used to generate the second inputs into the frozen text encoder, so that, for each data pair, the third text embedding is similar to the image embedding.

9. An apparatus for using a trained vision-language machine learning, ML, model trained according to the method of any of claims 1 to 8, to classify images depicting novel or known classes, the apparatus comprising:

an interface for receiving at least one input text data item containing at least one class name;
storage storing a list of class names and corresponding text embeddings; and
at least one processor coupled to memory arranged to use the trained vision-language ML model to:

generate, using a text encoder of the vision-language ML model, a text embedding representing each class name in the input text data item,
compare the generated text embedding to text embeddings of the class names in the stored list to determine whether the generated text embedding is novel, and
add, when the generated text embedding for a class name is novel, the class name and the corresponding text embedding to the list of class names in the storage.

10. The apparatus as claimed in claim 9 wherein the interface receives at least one image, and the at least one processor is arranged to:

identify, using a vision encoder of the vision-language ML model, at least one object in each input image, and generate, using the vision encoder, an image embedding for each identified object;
compare the image embedding for each identified object with text embeddings in the storage, to determine a similarity; and
output, using the comparison, a class name for each identified object based on the most similar embeddings.

11. The apparatus as claimed in claim 9 or 10 wherein the interface receives the at least one input text data item from a user or from an external source.

12. The apparatus as claimed in claim 9, 10 or 11 wherein the at least one input text data item is a single novel class name and/or at least one sentence containing the novel class name.

13. The apparatus as claimed in any of claims 10 to 12 further comprising an AI assistant, wherein the class name output from the vision-language ML model is input into the AI assistant for processing.

14. The apparatus as claimed in claim 13 wherein:

the AI assistant is an AI cooking assistant;
the interface is arranged to receive a plurality of input text data items comprising ingredients from a target recipe, and at least one image of a user following the target recipe;
the processor uses the trained vision-language ML model to identify objects in the at least one image corresponding to the ingredients; and
the AI assistant uses the identified objects to provide instructions to the user.

15. The apparatus as claimed in any of claims 9 to 14 wherein:

the storage comprises a plurality of images;
the interface is arranged to receive an input text data item indicating an object or class to be identified in the plurality of images; and

the processor uses the trained vision-language ML model to output at least one image from the plurality of images corresponding to the input text data item.

FIGURE 1A

FIGURE 1B

FIGURE 1C

FIGURE 1D

12             14

FIGURE 1E

FIGURE 1F

FIGURE 2A

List of textual augmentation templates.
Examples:
- *A rotated photo of a {}.*
- *A close-up image of the {}.*
- *An image of a {}, a type of texture.*
*Etc.*

16

## Input:

List of **class names for which NO visual examples are available**

Insert "class name" in the place of "{}".

## Output:

**List of template augmented textual prompts.**

Examples for class name "Siberian cat":
- *A rotated photo of a Siberian cat .*
- *A close-up image of the Siberian cat.*
- *An image of a Siberian cat, a type of texture.*
*Etc.*

20

FIGURE 2B

FIGURE 2C

**22**

Dataset with labeled
pairs: **image + class name**

**Input1:** augmented image     **Input2:** corresponding class names

**Output:**

Image encoder with updated
Layer norms.

**12**

**10**

Frozen Image encoder
(a neural network
model)

Frozen text encoder
(a neural network
model)

Learnable prompts
(a set of vectors)

Update the layer norm
weights only
With respect to the loss

*Computed descriptors*

*Computed descriptors*

**18**

Minimize cross-entropy loss between
The descriptors created by image encoder and
The ones created by the text encoder

FIGURE 2D

**Input:**

List of class names,
e.g.: French butter, oat milk etc.

**User defined or automatically downloaded from a store.**

**Input:**

**AI model:**

## LASP

| Vision encoder | ① | Text encoder | ② |

| Trained prompts | ③ |

| List of class names | ④ |

**Output:**

List of objects/classes recognized:

- ...
- oat milk
- red chilli

**Output:**

Informs the user automatically what products they need to buy, or wherever they have the right ingredients for the recipe they plan to cook.

**AI assistant**

Analyze the data

FIGURE 3

(a) Eurosat; Ours (0.516) vs CoOP (0.491)

(b) DTD; Ours (0.644) vs CoOP (0.488)

c) Flowers102; Ours (0.628) vs CoOP (0.554)

(d) Food101; Ours (0.487) vs CoOP (0.397)

FIGURE 4

EP 4 343 624 A1

| Dataset | Set | CLIP [24, 36] | CoOp [36] | CoCoOp [35] | ProDA [19] | LASP (Ours) | LASP-V (Ours) | Δ |
|---|---|---|---|---|---|---|---|---|
| Average | Base | 69.34 | 82.69 | 80.47 | 81.56 | 82.70 | **83.18** | +0.49 |
| | New | 74.22 | 63.22 | 71.69 | 72.30 | 74.90 | **76.11** | +1.89 |
| | H | 71.70 | 71.66 | 75.83 | 76.65 | 78.61 | **79.48** | +2.83 |
| ImageNet | Base | 72.43 | **76.47** | 75.98 | 75.40 | 76.20 | 76.25 | -0.22 |
| | New | 68.14 | 67.88 | 70.43 | 70.23 | 70.95 | **71.17** | +0.74 |
| | H | 70.22 | 71.92 | 73.10 | 72.72 | 73.48 | **73.62** | +0.52 |
| Caltech101 | Base | 96.84 | 98.0 | 97.96 | **98.27** | 98.10 | 98.17 | -0.10 |
| | New | 94.0 | 89.91 | 93.81 | 93.23 | 94.24 | **94.33** | +0.33 |
| | H | 95.40 | 93.73 | 95.84 | 95.86 | 96.16 | **96.21** | +0.35 |
| OxfordPets | Base | 91.17 | 93.67 | 95.20 | 95.43 | **95.90** | 95.73 | +0.30 |
| | New | 97.26 | 95.29 | 97.69 | 97.83 | **97.93** | 97.87 | +0.04 |
| | H | 94.12 | 94.47 | 96.43 | 96.62 | **96.90** | 96.79 | +0.16 |
| Stanford Cars | Base | 63.37 | **78.12** | 70.49 | 74.70 | 75.17 | 75.23 | -2.89 |
| | New | **74.89** | 60.40 | 73.59 | 71.20 | 71.60 | 71.77 | -3.12 |
| | H | 68.85 | 68.13 | 72.01 | 72.91 | 73.34 | **73.46** | +0.55 |
| Flowers102 | Base | 72.08 | 97.60 | 94.87 | **97.70** | 97.0 | 97.17 | -0.53 |
| | New | **77.80** | 59.67 | 71.75 | 68.68 | 74.0 | 73.53 | -4.27 |
| | H | 74.83 | 74.06 | 81.71 | 80.66 | 83.95 | **83.71** | +2.0 |
| Food101 | Base | 90.10 | 88.33 | 90.70 | 90.30 | 91.20 | **91.20** | +0.50 |
| | New | 91.22 | 82.26 | 91.29 | 88.57 | 91.70 | **91.90** | +0.61 |
| | H | 90.66 | 85.19 | 90.99 | 89.43 | 91.44 | **91.54** | +0.55 |
| FGVC Aircraft | Base | 27.19 | **40.44** | 33.41 | 36.90 | 34.53 | 38.05 | -2.39 |
| | New | **36.29** | 22.3 | 23.71 | 34.13 | 30.57 | 33.20 | -3.09 |
| | H | 31.09 | 28.75 | 27.74 | **35.46** | 32.43 | **35.46** | 0.0 |
| SUN397 | Base | 69.36 | 80.6 | 79.74 | 78.67 | 80.70 | **80.70** | +0.10 |
| | New | 75.35 | 65.89 | 76.86 | 76.93 | 78.60 | **79.30** | +2.37 |
| | H | 72.23 | 72.51 | 78.27 | 77.79 | 79.63 | **80.0** | +1.73 |
| DTD | Base | 53.24 | 79.44 | 77.01 | 80.67 | 81.4 | **81.10** | +1.53 |
| | New | 59.9 | 41.18 | 56.0 | 56.48 | 58.6 | **62.57** | +3.10 |
| | H | 56.37 | 54.24 | 64.85 | 66.44 | 68.14 | **70.64** | +4.20 |
| EuroSAT | Base | 56.48 | 92.19 | 87.49 | 83.90 | 94.60 | **95.0** | +2.81 |
| | New | 64.05 | 54.74 | 60.04 | 66.0 | 77.78 | **83.37** | +17.37 |
| | H | 60.03 | 68.9 | 71.21 | 73.88 | 85.36 | **88.86** | +14.98 |
| UCF101 | Base | 70.53 | 84.69 | 82.33 | 85.23 | 84.77 | **85.53** | +0.30 |
| | New | 77.50 | 56.05 | 73.45 | 71.97 | 78.03 | **78.20** | +0.70 |
| | H | 73.85 | 67.46 | 77.64 | 78.04 | 81.26 | **81.70** | +3.66 |

FIGURE 5

EP 4 343 624 A1

| Dataset | Set | Baseline [36] | Text-to-Text | +Grouped | +Align (LASP) | + Virtual (LASP-V) |
|---|---|---|---|---|---|---|
| Average | Base | 82.69 | 81.26 | 81.87 | 82.70 | **83.18** |
| | New | 63.22 | 71.54 | 73.48 | 74.90 | **76.11** |
| | H | 71.66 | 76.09 | 77.44 | 78.61 | **79.48** |
| ImageNet | Base | **76.47** | 75.97 | 76.20 | 76.20 | 76.25 |
| | New | 67.88 | 70.31 | 70.70 | 70.95 | **71.17** |
| | H | 71.92 | 73.03 | 73.34 | 73.48 | **73.62** |
| Caltech101 | Base | 98.0 | 97.70 | 97.97 | 98.10 | **98.17** |
| | New | 89.91 | 94.08 | 94.27 | 94.24 | **94.33** |
| | H | 93.73 | 95.85 | 96.08 | 96.16 | **96.21** |
| OxfordPets | Base | 93.67 | 95.13 | 95.63 | **95.90** | 95.73 |
| | New | 95.29 | 96.23 | 97.87 | **97.93** | 97.87 |
| | H | 94.47 | 95.68 | 96.73 | **96.90** | 96.79 |
| Stanford Cars | Base | **78.12** | 72.46 | 73.50 | 75.17 | 75.23 |
| | New | 60.40 | 71.80 | **72.1** | 71.60 | 71.77 |
| | H | 68.13 | 72.19 | 72.93 | 73.34 | **73.46** |
| Flowers102 | Base | **97.60** | 96.47 | 96.80 | 97.0 | 97.17 |
| | New | 59.67 | 70.7 | **74.0** | **74.0** | 73.53 |
| | H | 74.06 | 81.59 | 83.87 | **83.95** | 83.71 |
| Food101 | Base | 88.33 | 90.30 | 91.0 | **91.20** | **91.20** |
| | New | 82.26 | 90.73 | 90.87 | 91.70 | **91.90** |
| | H | 85.19 | 90.51 | 90.93 | 91.44 | **91.54** |
| FGVC Aircraft | Base | **40.44** | 32.63 | 33.05 | 34.53 | 38.05 |
| | New | 22.3 | 30.46 | 31.80 | 30.57 | **33.20** |
| | H | 28.75 | 31.57 | 32.41 | 32.43 | **35.46** |
| SUN397 | Base | 80.6 | 80.20 | 80.55 | **80.70** | **80.70** |
| | New | 65.89 | 75.56 | 77.11 | 78.60 | **79.30** |
| | H | 72.51 | 77.81 | 78.79 | 79.63 | **80.0** |
| DTD | Base | 79.44 | 79.13 | 80.5 | **81.4** | 81.10 |
| | New | 41.18 | 52.1 | 56.20 | 58.6 | **62.57** |
| | H | 54.24 | 62.82 | 66.19 | 68.14 | **70.64** |
| EuroSAT | Base | 92.19 | 91.23 | 91.90 | 94.60 | **95.0** |
| | New | 54.74 | 63.16 | 66.37 | 77.78 | **83.37** |
| | H | 68.9 | 74.64 | 77.07 | 85.36 | **88.86** |
| UCF101 | Base | 84.69 | 82.7 | 83.47 | 84.77 | **85.53** |
| | New | 56.05 | 71.80 | 77.07 | 78.03 | **78.20** |
| | H | 67.46 | 76.86 | 80.14 | 81.26 | **81.70** |

FIGURE 6

33

**(a) DTD.**

| #Templates | 1 | 34 | 100 |
|---|---|---|---|
| Text-to-Text (R) | 49.02 | 51.63 | 52.64 |
| Text-to-Text | **50.73** | **52.10** | **56.53** |

**(b) EuroSAT.**

| #Templates | 1 | 34 | 100 |
|---|---|---|---|
| Text-to-Text (R) | 55.01 | 59.9 | 62.1 |
| Text-to-Text | **56.97** | **63.16** | **65.13** |

**(c) UCF101.**

| #Templates | 1 | 34 | 100 |
|---|---|---|---|
| Text-to-Text (R) | 67.5 | 68.6 | 70.03 |
| Text-to-Text | **71.36** | **71.80** | **72.77** |

FIGURE 7

| Set | CE | $L_1$ | $L_2$ |
|---|---|---|---|
| Base | 81.26 | **81.50** | 81.47 |
| New | **71.54** | 66.01 | 65.80 |
| H | **76.09** | 73.54 | 72.80 |

FIGURE 8

(a) EuroSAT.

| Method | w/o distractors | | | with distractors | | |
|---|---|---|---|---|---|---|
| | Base | New | H | Base | New | H |
| LASP | 86.25 | 64.63 | 73.89 | 86.0 | 55.80 | 67.68 |
| LASP-V | **90.0** | **65.73** | **75.97** | **90.8** | **59.87** | **72.16** |

(b) Food101.

| Method | w/o distractors | | | with distractors | | |
|---|---|---|---|---|---|---|
| | Base | New | H | Base | New | H |
| LASP | **87.17** | 87.53 | 87.34 | **87.01** | 86.90 | 86.95 |
| LASP-V | **87.17** | **87.63** | **87.39** | 86.99 | **87.10** | **87.04** |

(c) Flowers102.

| Method | w/o distractors | | | with distractors | | |
|---|---|---|---|---|---|---|
| | Base | New | H | Base | New | H |
| LASP | 90.97 | 67.8 | 77.69 | 90.0 | 67.1 | 76.68 |
| LASP-V | **93.20** | **69.93** | **79.9** | **92.05** | **69.08** | **78.92** |

(d) OxfordPets.

| Method | w/o distractors | | | with distractors | | |
|---|---|---|---|---|---|---|
| | Base | New | H | Base | New | H |
| LASP | **92.53** | **94.20** | **91.52** | 91.53 | 92.60 | 92.06 |
| LASP-V | 92.25 | 93.97 | 93.10 | **92.23** | **93.17** | **92.69** |

FIGURE 9

(a) Food101.

| Method | w/o distractors | | | with distractors | | |
|---|---|---|---|---|---|---|
| | Base | New | H | Base | New | H |
| LASP | **87.17** | 87.53 | 87.34 | 82.70 | 83.47 | 83.08 |
| LASP-V | **87.17** | **87.63** | **87.39** | **83.11** | **83.95** | **83.52** |

(b) Flowers102.

| Method | w/o distractors | | | with distractors | | |
|---|---|---|---|---|---|---|
| | Base | New | H | Base | New | H |
| LASP | 90.97 | 67.8 | 77.69 | 80.16 | 62.50 | 70.23 |
| LASP-V | **93.20** | **69.93** | **79.9** | **83.95** | **65.31** | **73.47** |

FIGURE 10

Training ML model

Obtaining a first training dataset S100

Generating, for each class name in the first training dataset, at least one augmented textual prompt S102

Generating a plurality of first inputs by concatenating a learnable soft prompt to each class name from the first training dataset S108

Inputting the at least one augmented textual prompt into a frozen text encoder S104

Inputting the class names and plurality of first inputs into the frozen text encoder S110

Outputting, from the frozen text encoder, a first text embedding S106

Outputting, from the frozen text encoder, a second text embedding S112

Minimising a cross-entropy text-to-text loss between the first and second text embeddings S114

FIGURE 11

## Using trained ML model

```
┌─────────────────────────────────────────────────────────┐
│   Receive at least one input text data item S200         │
└─────────────────────────────────────────────────────────┘
                            │
                            ▼
┌─────────────────────────────────────────────────────────┐
│  Generate, using a text encoder of the ML model, the     │
│  a text embedding representing a class name in the       │
│  input text data item S202                               │
└─────────────────────────────────────────────────────────┘
                            │
                            ▼
┌─────────────────────────────────────────────────────────┐
│  Compare generated text embedding to text                │
│  embeddings of class names in a stored list of class     │
│  names and the corresponding text embeddings, to         │
│  determine whether the generated text embedding is       │
│  novel S204                                              │
└─────────────────────────────────────────────────────────┘
                            │
                            ▼
┌─────────────────────────────────────────────────────────┐
│  Add, when the generated text embedding for a class      │
│  name is novel, the class name and corresponding         │
│  text embedding to the list of class names in the        │
│  storage S206                                            │
└─────────────────────────────────────────────────────────┘
```

FIGURE 12

300

Server 302

| Processor(s) 304 | Training Data Set 308 |
|---|---|
| Memory 306 | ML Model 310 |

Apparatus 312

| Processor(s) 314 | Memory 316 |
|---|---|

Trained ML Model
318

User Interface 320

FIGURE 13

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BEIER ZHU ET AL: "Prompt-aligned Gradient for Prompt Tuning", ARXIV.ORG, CORNELL UNIVERSITY LIBRARY, 201 OLIN LIBRARY CORNELL UNIVERSITY ITHACA, NY 14853, 30 May 2022 (2022-05-30), XP091234552, * abstract; Sections 1 and 3-5; Appendix C.2; figure 3 * | 1-15 | INV. G06N3/045 G06N3/096 |
| X | KAIYANG ZHOU ET AL: "Learning to Prompt for Vision-Language Models", ARXIV.ORG, CORNELL UNIVERSITY LIBRARY, 201 OLIN LIBRARY CORNELL UNIVERSITY ITHACA, NY 14853, 12 August 2022 (2022-08-12), XP091292953, DOI: 10.1007/S11263-022-01653-1 * abstract; Sections 1 and 3-5; figures 1, 2 * | 1-15 | |
| A | NIV COHEN ET AL: ""This is my unicorn, Fluffy": Personalizing frozen vision-language representations", ARXIV.ORG, CORNELL UNIVERSITY LIBRARY, 201 OLIN LIBRARY CORNELL UNIVERSITY ITHACA, NY 14853, 13 June 2022 (2022-06-13), XP091245346, * abstract; Sections 1 and 3-6; figures 1-4, 6 * | 1-15 | **TECHNICAL FIELDS SEARCHED (IPC)**<br><br>G06N |

-/--

The present search report has been drawn up for all claims

| Place of search | Date of completion of the search | Examiner |
|---|---|---|
| The Hague | 13 February 2024 | Klasen, TJ |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 23 19 6998

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG HAO ET AL: "Decomposing generation networks with structure prediction for recipe generation", PATTERN RECOGNITION, ELSEVIER, GB, vol. 126, 7 February 2022 (2022-02-07), XP086996526, ISSN: 0031-3203, DOI: 10.1016/J.PATCOG.2022.108578 [retrieved on 2022-02-07] * Section 3; figure 2 * ----- | 14 | |
| | | | **TECHNICAL FIELDS SEARCHED (IPC)** |

The present search report has been drawn up for all claims

| Place of search | Date of completion of the search | Examiner |
|---|---|---|
| The Hague | 13 February 2024 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Learning transferable visual models from natural language supervision. **ALEC RADFORD ; JONG WOOK KIM ; CHRIS HALLACY ; ADITYA RAMESH ; GABRIEL GOH ; SANDHINI AGARWAL ; GIRISH SASTRY ; AMANDA ASKELL ; PAMELA MISHKIN ; JACK CLARK et al.** In International Conference on Machine Learning. PMLR, 2021, 8748-8763
- **KAIYANG ZHOU ; JINGKANG YANG ; CHEN CHANGE LOY ; ZIWEI LIU.** Learning to prompt for vision-language models. *International Journal of Computer Vision,* 2022, vol. 130 (9), 2337-2348
- **KAIYANG ZHOU ; JINGKANG YANG ; CHEN CHANGE LOY ; ZIWEI LIU.** Conditional prompt learning for vision-language models. *In Proceedings of the IEEE/CVF Conference on Computer Vision and Pattern Recognition,* 2022, 16816-16825
- **ALEC RADFORD ; JEFFREY WU ; REWON CHILD ; DAVID LUAN ; DARIO AMODEI ; ILYA SUTSKEVER et al.** Language models are unsupervised multitask learners. *OpenAI blog,* 2019, vol. 1 (8), 9
- Imagenet: A large-scale hierarchical image database. **JIA DENG ; WEI DONG ; RICHARD SOCHER ; LI-JIA LI ; KAI LI ; LI FEI-FEI.** In 2009 IEEE conference on computer vision and pattern recognition. Ieee, 2009, 248-255
- Learning generative visual models from few training examples: An incremental bayesian approach tested on 101 object categories. **LI FEI-FEI ; ROB FERGUS ; PIETRO PERONA.** In 2004 conference on computer vision and pattern recognition workshop. IEEE, 2004, 178-178
- Cats and dogs. **OMKAR M PARKHI ; ANDREA VEDALDI ; ANDREW ZISSERMAN ; CV JAWAHAR.** In 2012 IEEE conference on computer vision and pattern recognition. IEEE, 2012, 3498-3505

- **JONATHAN KRAUSE ; MICHAEL STARK ; JIA DENG ; LI FEI-FEI.** 3d object representations for fine-grained categorization. *In Proceedings of the IEEE international conference on computer vision workshops,* 2013, 554-561
- Automated flower classification over a large number of classes. **MARIA-ELENA NILSBACK ; ANDREW ZISSERMAN.** In 2008 Sixth Indian Conference on Computer Vision, Graphics & Image Processing. IEEE, 2008, 722-729
- Food-101-mining discriminative components with random forests. **LUKAS BOSSARD ; MATTHIEU GUILLAUMIN ; LUC VAN GOOL.** In European conference on computer vision. Springer, 2014, 446-461
- Sun database: Large-scale scene recognition from abbey to zoo. **JIANXIONG XIAO ; JAMES HAYS ; KRISTA A EHINGER ; AUDE OLIVA ; ANTONIO TORRALBA.** In 2010 IEEE computer society conference on computer vision and pattern recognition. IEEE, 2010, 3485-3492
- **MIRCEA CIMPOI ; SUBHRANSU MAJI ; LASONAS KOKKINOS ; SAMMY MOHAMED ; ANDREA VEDALDI.** Describing textures in the wild. *In Proceedings of the IEEE conference on computer vision and pattern recognition,* 2014, 3606-3613
- **PATRICK HELBER ; BENJAMIN BISCHKE ; ANDREAS DENGEL ; DAMIAN BORTH.** Eurosat: A novel dataset and deep learning benchmark for land use and land cover classification. *IEEE Journal of Selected Topics in Applied Earth Observations and Remote Sensing,* 2019, vol. 12 (7), 2217-2226
- **KHURRAM SOOMRO ; AMIR ROSHAN ZAMIR ; MUBARAK SHAH.** Ucf101: A dataset of 101 human actions classes from videos in the wild. *arXiv:1212.0402,* 2012
- **YUNING LU ; JIANZHUANG LIU ; YONGGANG ZHANG ; YAJING LIU ; XINMEI TIAN.** Prompt distribution learning. *In IEEE Conference on Computer Vision and Pattern Recognition,* 2022